(19) Europäisches Patentamt
European Patent Office
Office européen des brevets

(11) **EP 3 413 410 B1**

(12) **EUROPEAN PATENT SPECIFICATION**

(45) Date of publication and mention
of the grant of the patent:
**05.03.2025 Bulletin 2025/10**

(21) Application number: **17174853.6**

(22) Date of filing: **07.06.2017**

(51) International Patent Classification (IPC):
*H01S 3/10* *(2006.01)*    *H01S 3/13* *(2006.01)*
*G02B 5/18* *(2006.01)*    *H01S 3/23* *(2006.01)*
*H01S 3/00* *(2006.01)*    *G02B 27/42* *(2006.01)*

(52) Cooperative Patent Classification (CPC):
**H01S 3/1302; G02B 5/1861; H01S 3/10015;**
G02B 27/4261; H01S 3/005; H01S 3/0085;
H01S 3/1003; H01S 3/2316; H01S 3/2383;
H01S 3/2391

(54) **RADIATION FIELD GENERATING SYSTEM**

STRAHLUNGSFELDERZEUGUNGSSYSTEM

SYSTÈME DE PRODUCTION DE CHAMP DE RAYONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.12.2018 Bulletin 2018/50**

(73) Proprietor: **Universität Stuttgart
70174 Stuttgart (DE)**

(72) Inventors:
• **ABDOU AHMED, Marwan
70565 Stuttgart (DE)**
• **ONUSEIT, Volkher
70565 Stuttgart (DE)**

(74) Representative: **Pfiz/Gauss Patentanwälte
PartmbB
Tübinger Strasse 26
70178 Stuttgart (DE)**

(56) References cited:
US-A- 5 657 153          US-A1- 2006 050 392
US-A1- 2011 085 149      US-A1- 2016 111 849
US-B1- 6 680 799

• INON MOSHE ET AL: "Production of radially or
azimuthally polarized beams in solid-state lasers
and the elimination of thermally induced
birefringence effects", OPTICS LETTERS, vol.
28, no. 10, 15 May 2003 (2003-05-15), US, pages
807, XP055689999, ISSN: 0146-9592, DOI:
10.1364/OL.28.000807

**Description**

The invention relates to a radiation field generating system comprising a radiation field providing device and a radiation field amplifying device, said radiation field amplifying device comprises at least one laser active medium which exhibits a population inversion and said radiation field amplifying device amplifies an introduced radiation field which is provided by said radiation field providing device.

Radiation field generating systems having the aforementioned features are known from the prior art, for example from US 5,657,153 A and US 2011/0085149 A1 and US 2016/0111849 A1. Diffraction gratings for laser resonators are known for example from US 2006/0050392 A1 and US 6,680,799 B1. Optics Letters, Vol. 28, No. 10, pages 807-809 relates to production and amplification of radially and azimuthally (tangentially) polarized laser beams and is directed to elimination of thermal-birefringence-induced aberrations to allow better beam quality from rod-based high-power lasers.

It is the object of the present invention to improve an operation of such a radiation field generating system.

In particular, the object of the present invention is to provide a radiation field generating system which allows for a flexible modulation of an amplified radiation field, which is provided by said radiation field amplifying device and which provides said amplified radiation field at high powers.

This object is solved by a radiation field generating system according to claim 1.

One advantage of the present invention has to be seen in the fact that within such a radiation field generating system during a dead time of one of said first and said second contributions to said introduced radiation field the other contribution is introduced into said radiation field amplifying device and accordingly disadvantageous effects which usually occur during such dead times are avoided.

In a dead time of said introduced radiation field its intensity is decreased, in particular it is essentially zero and/or negligible small.

For example, such dead times are longer than 50 ns, in particular longer than 50 $\mu$s, for example longer than 500 $\mu$s.

Typically, for pulsed radiation fields, for which within each period one pulse occurs, such dead times are longer than one period, in particular longer than twice a period, for example longer five times the period.

In particular, during dead times of an introduced radiation field damages to said radiation field amplifying device can occur.

Usually damages to said radiation field amplifying device occur during a dead time due to storage of excess energy in said at least one laser active medium.

In particular, during dead times there are no emissions in said at least one laser active medium stimulated by said introduced radiation field or by one of its contributions and due to a further pumping said population inversion increases, in particular increases and exceeds a tolerable level.

The amplification of said introduced radiation field depends on the level of said population inversion. In general, the higher the population inversion is, the higher the amplification.

Accordingly, in general immediately after a dead time said introduced radiation field is stronger amplified as before said dead time due to said increase of said population inversion.

Thereby, for example it is even possible that such stronger amplified introduced radiation field damages parts of said radiation field generating system, for example said amplifying device.

Furthermore typically said introduced radiation field is amplified in a nonuniform manner due to the increased population inversion immediately after a dead time compared with its level before the dead time. Accordingly, said amplified radiation field would exhibit a varying intensity.

Such variations in the intensity are undesired in applications of said amplified radiation field. For said applications typically a radiation field with well defined, as less as possible varying properties is desired.

The present invention provides a solution with a constructive simple configuration and which is therefore less error-prone.

Additionally, the design of the present invention is essentially independent of the properties of the used first contribution to said introduced radiation field, but is rather adaptable to it. Therefore the provided solution is quite flexible.

Advantageously, by introducing said second contribution to said introduced radiation field into said radiation field amplifying device during dead times of said first contribution, said aforementioned disadvantageous effects due to dead times are avoided or at least diminished.

In particular, said first contribution to said introduced radiation field can be introduced as single pulses on demand with in particular dead times of irregular lengths in between one or several pulses and a corresponding contribution to said amplified radiation field is provided advantageously in a more uniform manner.

In particular, said radiation field amplifying device amplifies said first and said second contributions to said introduced radiation field and provides said amplified radiation field with a first contribution and a second contribution which correspond to said first and second contributions to said introduced radiation field, respectively.

Advantageously, said first and said second contributions to said amplified radiation field can be split by a splitting unit behind said radiation field amplifying device due to their difference in at least one characteristic property.

Therefore, said first and said second contributions to said amplified radiation field can be provided separate from each other to different applications.

Preferably, this allows to operate the radiation field generating system in a more stable manner. Furthermore it is operable to modulate at least one of said contributions to said introduced radiation field with high speed and to provide said amplified radiation field with high power.

Advantageously, a fast modulation and a switching of at least one of said contributions to said amplified radiation field at high average and high peak powers is possible without an onset of undesired effects, such as fluctuations in the average power or peak power of said at least one contribution to said amplified radiation field.

Furthermore, in advantageous embodiments one of said first and/or second contributions compensates for modulations in the other of said contributions.

In particular, said radiation field generating system is operated in a tunable regime.

Within said tunable regime the intensity and/or power of said amplified radiation field is tunable by the intensity and/or power of said introduced radiation field.

Therefore, advantageously, the power of said amplified radiation field, in particular of its contributions, can be easily controlled and adjusted by selecting the intensity and/or power of said introduced radiation field, in particular of its contributions.

In particular, within said tunable regime the intensity and/or power of said amplified radiation field depends, for example essentially linearly, on the intensity and/or power of said introduced radiation field.

In particular, within said tunable regime a change of the intensity and/or power of said introduced radiation field by a factor x results in a change of the intensity and/or power of said amplified radiation field by at most a factor 3x, preferably by at most a factor 2x, in particular by at most a factor 1,5x.

In particular, within said tunable regime a change of the intensity and/or power of said introduced radiation field by a factor x results in a change of the intensity and/or power of said amplified radiation field by at least a factor x/3, preferably by at least a factor x/2, in particular by at least a factor 2x/3.

Said tunable regime is in particular bounded by above by a highest tunable power and/or intensity of said introduced radiation field. The corresponding amplified radiation field has a corresponding highest tunable amplified power or intensity, respectively.

For an introduced radiation field the power and/or intensity of which is by a certain amount higher than said highest tunable power or intensity, respectively, the power and/or intensity of said certain added amount is essentially not amplified. For example, for such an introduced radiation field, the power and/or intensity of said corresponding amplified radiation field is at least approximately the sum of the highest tunable amplified power or intensity, respectively, plus the added certain amount.

Advantageously, said introduced radiation field has a power and/or intensity below said highest tunable power or intensity, preferably of at most 90% of said highest tunable power or intensity, for example of at most 80% of said highest tunable power or intensity, respectively.

Preferably, said introduced radiation field has a power and/or intensity of at least 40% of said highest tunable power or intensity, in particular of at least 50% of said highest tunable power or intensity, for example of at least 60% of said highest tunable power or intensity, respectively.

With that, said amplified radiation field has high power and/or intensity and is still easily tunable by said introduced radiation field.

In particular, introduced radiation fields the power and/or intensity of which exceed a depleting power or intensity, deplete the population in an excited state of a laser active transition within said laser active medium such that said excited state is essentially unpopulated.

In some embodiments, said highest tunable power or intensity is at least approximately the same as said depleting power or intensity, respectively.

Preferably, said introduced radiation field has a power and/or intensity below said depleting power or intensity, in particular of at most 90% of said depleting power or intensity, for example of at most 80% of said depleting power or intensity, respectively.

Advantageously, said introduced radiation field has a power and/or intensity of at least 40% of said depleting power or intensity, in particular of at least 50% of said depleting power or intensity, for example of at least 60% of said depleting power or intensity, respectively.

In particular, the aforementioned preferred bounds for the power and/or intensity of said introduced radiation field correspond to the sum of said first and said second contribution to said introduced radiation field.

A particular preferably embodiment provides that said first and/or said second contribution to said introduced radiation field, in particular each of said contributions to said introduced radiation field, is switchable between different operational modes by said radiation field providing device.

With that, advantageously a flexible modulation of said first and/or said second contribution to said introduced radiation field and accordingly of said first and/or said second contribution to said amplified radiation field is possible.

In particular said first contribution and/or said second contribution to said introduced radiation field is switchable on demand by a user of said radiation field generating system.

Accordingly, in preferred embodiments said radiation field generating system is able to provide said first and/or said second contribution to said amplified radiation field, for example pulses of said contribution, on demand by a user and in particular to provide pulses at high power with a single pulse selection by the user.

For example, the operational modes in which said first and/or said second contributions are provided by said radiation field providing device is selected directly by the user.

In another preferred embodiment the user directly selects the operational mode in which said first contribution to said introduced radiation field is provided and advantageously said radiation field providing device selects the operational mode in which it provides said second contribution to said introduced radiation field based on the operational mode in which said first contribution to said introduced radiation field is provided.

Preferably, by such a coordination of the operational modes of said first and said second contributions to said introduced radiation field said second contribution to said introduced radiation field compensates for changes in said first contribution and said introduced radiation field is introduced in said radiation field amplifying device in a more uniform manner.

In particular, dead times of said introduced radiation field which exceed one millisecond, preferably which exceed 500 $\mu$s, for example which exceed 100 $\mu$s, are avoided.

In general, there are a variety of different operational modes possible.

According to the present invention different operational modes of said contributions to said introduced radiation field comprise at least a high mode and a low mode with an intensity of the respective contribution in said high mode being larger, for example at least five times larger, in particular at least ten times larger, preferably at least fifty times larger, in particular at least one hundred times larger, than in said low mode.

Accordingly, the intensity of said contributions to said introduced radiation field is switchable at least between a high intensity in said high mode and a low intensity in said low mode.

For example the intensity of said contribution in said low mode is essentially zero with said intensity being essentially zero in particular when an effect of said contribution with essentially zero intensity in said radiation field amplifying device is negligible small.

In particular, for said first and/or said second contribution being a pulsed radiation field, in its said low mode pulses with a low intensity occur or advantageously during its said low mode no pulses occur.

In some embodiments there are several modes which correspond to several levels of intensities.

Some embodiments provide that the intensity of said contributions is continuously adjustable.

There are corresponding operational modes of said first and said second contribution, that is said radiation field providing device provides said first contribution in one operational mode and said second contribution in an operational mode corresponding to said operational mode in which said first contribution is provided.

According to the present invention said radiation field providing device provides said second contribution to said introduced radiation field in said low mode when it provides said first contribution to said introduced radiation field in said high mode and/or said radiation field providing device provides said second contribution to said introduced radiation field in the high mode when it provides said first contribution to said introduced radiation field in the low mode.

An advantageous embodiment provides that said radiation field amplifying device comprises at least one pumping energy source which pumps pumping energy into said at least one laser active medium.

Accordingly, said at least one pumping energy source provides the energy to provide said population inversion.

For example said pumping energy source is a radiation field source and provides a pumping radiation field.

In an advantageous embodiment said second contribution to said introduced radiation field absorbs, in its high mode, during passing through said radiation field amplifying device at least approximately the same amount of energy than said first contribution to said introduced radiation field, in its high mode, absorbs during passing through said radiation field amplifying device.

Accordingly, in said radiation field amplifying device at least approximately the same amount of energy is absorbed either when said first contribution or said second contribution to said introduced radiation field passes through. Accordingly, at most a small amount of said provided pumping energy is accumulated in said radiation field amplifying device in dead times of one of said contributions.

In the preceding explanations and in the following explanations the formulation "at least approximately" designates that embodiments are comprised in which the given value is exactly realized or in which a deviation from the given value is at most $\pm$ 20 %, preferably at most $\pm$ 10 %, advantageously at most $\pm$ 5 %, preferably at most $\pm$ 1 %, in particular at most 0,2%.

A particular preferable embodiment provides that said second contribution to said introduced radiation field is selected and adjusted such that said population inversion is kept below an uppermost target level, in particular that the population inversion is kept below said uppermost target level when said first contribution to said introduced radiation field is provided in said low mode.

Preferably, said uppermost target level is smaller or essentially the same as said tolerable level.

Advantageously, in such embodiments said population inversion is kept below said uppermost target level and preferably damages due to an excess of said population inversion are avoided.

Furthermore, the amplification of said introduced radiation field does not exceed an uppermost amplification because said population inversion is kept below said uppermost target level.

Accordingly, said amplified radiation field and in particular its first contribution are provided without exceeding a tolerable intensity such that advantageously damages or undesired effects in the application of said amplified radiation field are avoided.

In particular said second contribution to said introduced radiation field is selected and adjusted such that said population inversion is kept within a target band with said target band being bounded by above from a higher target level and bounded by below by a lower target level and said lower target level corresponds to 40 % of said higher target level, in particular to 60 % of said higher target level, preferably to 80 % of said higher target level, for example to 90 % of said higher target level.

Advantageously said second contribution to said introduced radiation field is selected and adjusted such that said population inversion is kept within said target band when said first contribution to said introduced radiation field is provided in said low mode.

In particular, said higher target level is smaller or essentially the same as said tolerable level.

Preferably, said higher target level is lower or essentially the same as said uppermost target level.

Advantageously, an amplification of said introduced radiation field, in particular of its first contribution, is more uniform due to said population inversion being kept within said target band.

Accordingly, said amplified radiation field, in particular its first contribution, is preferably provided in such embodiments more uniform which improves the application of said amplified radiation field.

Advantageously, said second contribution to said introduced radiation field is selected and adjusted such that said population inversion is kept essentially constant at a desired target level with said population inversion being essentially constant at said desired target level if it is at said desired target level or deviates from said desired target level by at most $\pm$ 10 %, preferably by at most $\pm$ 5 %, in particular by at most $\pm$ 1 %.

Preferably, said second contribution to said introduced radiation field is selected and adjusted such that said population inversion is kept essentially constant at said desired target level when said first contribution to said introduced radiation field is provided in said low mode.

In particular said desired target level is lower or essentially the same as said tolerable level.

Preferably, said desired target is lower or essentially the same as said uppermost target level.

Advantageously, said desired target level lies within said target band.

In particular, in such embodiments the amplification of said introduced radiation field, in particular of its first contribution, is kept essentially at a constant level and advantageously said amplified radiation field, in particular its first contribution, is provided in an essentially uniform manner.

In particular, said first contribution to said amplified radiation field is provided even immediately after dead times and/or immediately after times in which said first contribution to said introduced radiation field has been provided in said low mode with essentially the same intensity as before said dead time or said time in which said first contribution has been provided in said low mode.

Preferably, said second contribution to said introduced radiation field is selected and adjusted such that the intensity of said amplified radiation field, in particular of said first contribution to said amplified radiation field is kept below an uppermost target intensity.

Preferably, damages which would occur if said amplified radiation field would be provided with an intensity larger than said uppermost target intensity do not occur in such preferred embodiments.

Furthermore, for applications it might be advantageous when said first contribution to said amplified radiation field is provided with an intensity not exceeding said uppermost target intensity.

In particular, the intensity of said first contribution to said amplified radiation field is kept below said uppermost target intensity when said population inversion is kept below said uppermost target level.

Preferably, said second contribution to said introduced radiation field is selected and adjusted such that the intensity of said amplified radiation field, in particular of said first contribution to said amplified radiation field, is kept within a target interval of intensities which is bounded by above from a higher target intensity and bounded by below by a lower target intensity with said lower target intensity corresponding to 40 % of said higher target intensity, in particular to 60 % of said higher target intensity, for example to 80 % of said higher target intensity, preferably to 90 % of said higher target intensity.

In particular, said second contribution to said introduced radiation field is selected and adjusted such that the intensity of said first contribution to said amplified radiation field is kept within said target interval of intensities when said first contribution to introduced radiation field is provided in said high mode.

Therefore advantageously said first contribution to said amplified radiation field is provided, in particular when said first contribution to said introduced radiation field is provided in said high mode, within said target interval of intensities and therefore in a more uniform manner which is preferable for use in certain applications.

In particular the intensity of said amplified radiation field, in particular of said first contribution to said amplified radiation field, is kept within said target interval of intensities provided said population inversion is kept within said target band.

For example, said higher target intensity is lower or essentially the same as said uppermost target intensity.

An advantageous embodiment provides that said second contribution to said introduced radiation field is selected and adjusted such that the intensity of said amplified radiation field, in particular of said first contribution to said amplified radiation field, is kept essentially constant at a desired target intensity with said intensity of said first contribution to said amplified radiation field being essentially constant at said desired target intensity if it is at said desired target intensity or deviates from said desired target intensity by at most $\pm\,10\,\%$, in particular by at most $\pm\,5\,\%$, preferably by at most $\pm\,1\,\%$. In particular said second contribution to said introduced radiation field is selected and adjusted such that the intensity of said first contribution to said amplified radiation field is kept essentially constant at said desired target intensity when said first contribution to said introduce radiation field is provided in said high mode.

For example said desired target intensity is smaller or at least essentially the same as said uppermost target intensity.

Advantageously, said desired target intensity lies within said target interval of intensities.

Therefore said first contribution to said amplified radiation field is provided with an essentially constant intensity which is advantageous for applications because said contribution to said amplified radiation field has an essentially constant intensity and malfunctions in the application due to fluctuations in the intensity are avoided.

In particular the intensity of said amplified radiation field, in particular of said first contribution to said amplified radiation field is kept essentially constant at said desired target intensity when said population inversion is kept essentially constant at said desired target level.

For example said selection and adjustment of said second contribution to said introduced radiation field comprises one or more of the factors of influence on a stimulated emission generated by said second contribution within said at least one laser active medium.

In particular said factors of influence are among others the intensity of said second contribution, the time evolution of the intensity of said second contribution, the absorption of said second contribution by said radiation field amplifying device, the amplification of said second contribution by said radiation field amplifying device, the wavelength of said second contribution, and the optical path length of said second contribution in said at least one laser active medium.

Preferably, said selection and adjustment of said second contribution to said introduced radiation field is based on one or more properties of said first contribution to said introduced radiation field, which are for example the intensity of said first contribution, the time evolution of the intensity of said first contribution, the absorption of said first contribution by said radiation field amplifying device, the amplification of said first contribution by said radiation field amplifying device, the wavelength of said first contribution and the optical path length of said first contribution in said at least one laser active material.

Advantageously, said selection and adjustment of said second contribution to said introduced radiation field comprises to adjust one or more of said factors of influence on stimulated emission generated by said second contribution such that said second contribution, in particular in said high mode, generates an at least approximately same amount of stimulated emissions as it is generated by said first contribution to said introduced radiation field, in particular in said high mode.

Therefore the amount of stimulated emission is advantageously at least approximately the same irrespectively whether said first contribution or said second contribution to said introduced radiation field is introduced into said radiation field amplifying device.

With respect to the polarization of said first and said second contribution to said introduced radiation field no further details have been given so far.

In some embodiments the polarizations of said first contribution and said second contribution to said introduced radiation field are essentially the same.

In a preferred embodiment the polarization directions of said first contribution and said second contribution to said introduced radiation field are at least approximately perpendicular to each other.

In preferred embodiments said first and said second contributions are polarized axial symmetrically to an optical axis of said radiation field generating system.

In particular, said first and said second contributions are polarized axial symmetrically with respect to an axis along which said contributions propagate.

According to the invention one of said first and said second contributions to said introduced radiation field has a radial polarization and the other of said first and said second contributions to said introduced radiation field has an azimuthal polarization.

For example, for applications a radial polarized radiation field can be preferred, because a radial radiation field can be better focused.

For drilling holes, an azimuthal polarized radiation field can be advantageously, because due to its particular absorption properties, an azimuthal radiation field can penetrate deeper in a material and the drilling process is more efficient.

With respect to the wavelengths of said first and said second contributions to said introduced radiation field no further details have been given so far.

In some preferred embodiments the wavelength of said first and said second contributions to said introduced radiation fields are essentially the same.

Said wavelengths of said first and said second contributions being in particular essentially the same if they are the same or deviate from each other by at most $\pm$ 1 %, in particular by at most $\pm$ 0,5 %, preferably by at most $\pm$ 0,1 %.

Advantageously, in such embodiments the absorption of said first and said second contributions in said radiation field amplifying device are essentially the same and the adjustment of said second contribution is easier.

In advantageous embodiments, said first and said second contributions stem from the same radiation field source and accordingly a cost efficient solution is provided. In addition, at least several of said factors of influence on stimulated emission are in this embodiments for both contributions the same, which simplifies the adjustment of said second contribution.

In other preferred embodiments the wavelengths of said first and said second contributions to said introduced radiation field are different.

For example, in some embodiments the wavelength of said first and said second contribution to said introduced radiation field differ by at least a value of a bandwidth of the pulses.

In particular, the wavelengths of said first and said second contributions to said introduced radiation field differ by at least 1 nm, in particular by at least 3 nm.

Advantageously, the values of the wavelength of said first and said second contributions to said introduced radiation field differ by less than 100 nm, for example by less than 50 nm, preferably by less than 20 nm, for example by less than 10 nm.

Preferably, the wavelength of said first and said second contributions to said introduced radiation field differ with respect to each other by less than 5 %, in particular by less than 2 %.

Advantageously, at least one of the wavelengths of said first and said second contribution to said introduced radiation field corresponds to a peak wavelength of an emission spectrum of said at least one laser active medium such that preferably the intensity of said contribution is particular advantageously amplified.

In some preferred embodiments it is provided that at least one of said wavelength of said first and said second contribution to said introduced radiation field lies within an interval of wavelength corresponding to a shoulder of a peak of said emission spectrum of said laser active medium.

In general, it is possible that the rates of emission of said at least one laser active medium at said wavelength of said first and said second contributions to said introduced radiation field are different.

For example, the rate of emission of said at least one laser active medium at the wavelength of said first contribution to said introduced radiation field is smaller than the rate of emission of said at least one laser active medium of the wavelength of the second contribution.

In other embodiments the rate of emission of said at least one laser active medium at the wavelength of said first contribution to said introduced radiation field is larger than the rate of emission of said at least one laser active medium at the wavelength of said second contribution.

In some advantageous embodiments it is provided that the rates of emission of said at least one laser active medium at the wavelength of said first and said second contributions to said introduced radiation field differ with respect to each other by less than 10 %, preferably by less than 5 %, in particular by less than 1 %.

With respect to the intensities of said first and said second contribution to said introduced radiation field no further details have been given so far.

For example the intensities of said first and said second contributions to said introduced radiation field in their respective high mode are at least approximately the same.

In some embodiments it is provided that the intensities of said first and said second contributions to said introduced radiation field in said low mode are at least approximately the same.

In particular the intensity of said second contribution to said introduced radiation field is selected and adjusted, in particular in said high mode, to compensate, in particular with respect to the level of said population inversion, for a decrease of the intensity of said first contribution to said introduced radiation field.

Advantageously, the intensity of said second contribution to said introduced radiation field in said high mode is adjusted such that at least approximately the same amount of stimulated emissions in said at least one laser active material occur, in particular when said first contribution is provided in its low mode and said second contribution is provided in its high mode, as when said first contribution to said introduced radiation field is provided in its high mode.

Further details to said first and said second contribution to said introduced radiation field have not been given so far.

In a preferred embodiment said first contribution to said introduced radiation field, in particular in said high mode and/or in said low mode, is a pulsed radiation field.

Therefore the radiation field generating system provides said first contribution to said amplified radiation field as pulses and in particular is operable to provide said first contribution to said amplified radiation field with pulses on demand.

In other embodiments said first contribution to said introduced radiation field, in particular in said high mode and/or in said low mode, is a continuous wave radiation field.

In a preferred embodiment said second contribution to said introduced radiation field, in particular in said high mode and/or in said low mode, is a pulsed radiation field.

Advantageously in such embodiments the selection and adjustment of said second contribution to said introduced radiation field is easier.

Furthermore in such embodiments the second contribution to said amplified radiation field is also a pulsed radiation field and may be used for further application.

In other advantageous embodiments said second contribution to said introduced radiation field, in particular in said high mode and/or said low mode, is a continuous wave radiation field.

Radiation field sources for continuous wave radiation fields are often cheaper and accordingly such embodiments may provide a cost efficient solution.

With respect to said radiation field providing device no further details have been given so far.

In general said radiation field providing device comprises at least one source of an initial radiation field.

In an advantageous embodiment said radiation field providing device comprises exactly one source of one initial radiation field.

This provides a cost efficient solution, because only one source is needed.

Furthermore, advantageously said first and said second contribution to said introduced radiation field stem from said one initial seed radiation field and accordingly in preferred embodiments the adjustment of said second contribution is easy because at least most of the characteristic properties of said first and said second contribution to said introduced radiation field are at least essentially the same.

In another preferred embodiment said radiation field providing device comprises several, in particular exactly two, sources of a first and a second initial radiation field.

Such embodiments advantageously provide more flexible solutions, because two sources of said first and said second initial radiation fields can be chosen and accordingly the properties of said first and said second initial radiation fields can be selected and adjusted as desired.

Furthermore in some embodiments said radiation field providing device comprises at least one modulator.

For example said radiation field providing device comprises exactly one modulator.

In other embodiments it is provided that said radiation field providing device comprises several, for example exactly two, modulators.

Advantageously said radiation field providing device comprises one modulator for each source of an initial radiation field.

Accordingly, in such embodiments each initial radiation field is modulated by said corresponding modulator as desired.

Said one or two or several modulators modulate said one or two or several initial seed radiation fields to provide a first seed radiation field and a second seed radiation field.

For example said exactly one initial radiation field is modulated by said exactly one modulator to provide said first and said second seed radiation fields.

In other embodiments said several, in particular two, initial radiation fields are modulated by said several, in particular two, modulators to provide said first and said second seed radiation fields.

Some embodiments provide that said exactly one initial radiation field is modulated by said several modulators or that said several initial radiation fields are modulated by said exactly one modulator.

In particular, said first and said second seed radiation fields are introduced by an introducing unit designated as said first and said second contributions to said introduced radiation field to said radiation field amplifying device.

In particular said at least one modulator, for example said exactly one modulator or said exactly two modulators, modulate the at least one or the exactly one initial radiation field or said first and said second initial radiation fields to provide said first and said second seed radiation fields in said different operational modes.

In preferred embodiments it is provided that said at least one modulator, in particular said exactly one modulator or said exactly two modulators, modulates the intensity and/or the propagation direction of said at least one or said exactly one initial radiation field or of said first and said second initial radiation fields to provide said first and said second seed radiation fields in said different operational modes.

Preferably said exactly two or several modulators are coordinated, for example by a coordinating device, such that one of said exactly two modulators or of said several modulators provide said second seed radiation field in an operational mode which is selected based on the operational mode in which said first seed radiation field is provided.

Advantageously due to this coordination of said two or several modulators, said first and said second seed radiation fields complement each other and preferably said introduced radiation field is provided without dead times, in particular to keep said population inversion in said at least one laser active medium as desired.

Preferably said exactly two or several modulators are coordinated such that one of said exactly two or several modulators provides said second seed radiation field in its low mode while another of said exactly two or several modulators provides said first seed radiation field in its high mode.

Furthermore it is advantageous if said exactly two or several modulators are coordinated such that one of said exactly two or several modulators provides said second seed radiation field in its high mode while another of said exactly two or several modulators provides said first seed radiation field in its low mode.

In advantageous embodiments one of said first and said second seed radiation fields is provided in its high mode while the other one is provided in its low mode. Thereby, preferably, said population inversion is kept as desired.

Other advantageous embodiments provide that said exactly one modulator provides said first and said second seed radiation fields.

For example said exactly one initial radiation field is provided to said exactly one modulator and said exactly one modulator is operable to guide said exactly one initial radiation field to different optical paths to provide either said first seed radiation field or said second seed radiation field.

For example said exactly one modulator changes the direction of propagation of said exactly one initial radiation field to provide either said first seed radiation field or said second seed radiation field.

In particular said exactly one modulator provides said second seed radiation field in its low mode while providing said first seed radiation field in its high mode.

Furthermore it is advantageous if said exactly one modulator provides said second seed radiation field in its high mode while providing said first seed radiation field in its low mode.

With respect to further elements of said radiation field providing device no further details have been given so far.

In particular said radiation field providing device comprises at least one polarization adjusting unit to adjust the polarization state of at least one of said seed radiation fields, in particular to adjust the polarization state of said second seed radiation field.

With respect to further elements of said radiation field generating system no further details have been given so far.

In particular, said radiation field generating system comprises a splitting unit to split said first and said second contributions to said amplified radiation field.

Preferably, in such a way pulses on demand, in particular with the advantages as described above, are provided by said radiation field generating system.

For example said splitting unit comprises at least one thin-film polarizer.

Preferably, the radiation field generating system comprises a grating mirror.

Grating mirrors are for example known from Optics Letters 2007, 3272 and Optics Express 2011, 5093 and Optics Letters 2012, 1763.

The grating mirror has preferably gratings which are rotational symmetrical with respect to an axis of said grating mirror.

One advantage of such grating mirrors is that their reflection properties are different for incident radiation fields which are azimuthally polarized or radially polarized.

In particular, with such grating mirrors azimuthally and radially polarized contributions to a radiation field can be split.

In particular, said splitting unit comprises such a grating mirror.

In particular, said grating mirror has grooves at a structured side.

In particular said axis of said grating mirror runs at least approximately perpendicular to a geometrical plane in which said structure side essentially extends.

Preferably, said grooves run essentially along circular lines around an axis of said grating mirror.

In particular, said grooves have with respect to an intersecting plane which contains said axis of said grating mirror, in particular with respect to all such intersecting planes, said grooves have an essentially rectangular shaped cross section.

In particular said grooves of said grating mirror extend from an uppermost surface of said structured side into said grating mirror with a depth D.

For example, said depth D is larger than 20 nm, preferably larger than 40 nm, in particular larger than 60 nm.

In particular, said depth D is smaller than 1.000 nm, advantageously smaller than 600 nm, preferably smaller than 400 nm, for example smaller than 200 nm.

Furthermore it is advantageous if said grooves are arranged in a structural area periodically.

In particular said grooves which run essentially along circular lines are arranged periodically in radial direction with respect to said axis of said grating mirror.

Preferably, a periodicity of said structure of grooves of said grating mirror is larger than 200 nm, advantageously larger than 400 nm, for example larger than 600 nm.

In particular, said periodicity of said structure of grooves of said grating mirror is smaller than 1.200 nm, preferably smaller than 950 nm, for example smaller than 850 nm.

In particular a duty cycle, which is in particular the ratio between the distance between two adjacent but separated grooves and the periodicity, of said structure of said grooves is between 0,2 and 0,9.

In particular said duty cycle is larger than 0,3, preferably larger than 0,4.

In particular said duty cycle is smaller than 0,8, preferably smaller than 0,7, in particular smaller than 0,6.

Furthermore advantageously said grating mirror comprises several, for example 2 or 3 or 4 or 5 or 6 or 7 or 8 or 9 or 10 or 11 or 12 or 13 or 14 or 15, layers with alternating refractive indices.

In another preferred embodiment said grating mirror comprises exactly one layer, which advantageously comprises one or more of the following features.

For example, layers with a high refractive index have a refractive index which is larger than 2,0 and/or which is smaller than 2,6.

In particular, layers with a high refractive index comprise one or several materials of $Ta_2O_5$, $HfO_2$, $Nb_2O_5$, $TiO_2$, $Al_2O_3$, $Si_3Ni_4$ and/or Si.

Preferably, layers with a low refractive index have a refractive index which is larger than 1,4 and/or which is smaller than 1,6.

For example layers with a lower refractive index comprise $SiO_2$ and/or $MgF_2$.

In particular, said grooves are at least partly, preferably fully, material free.

In advantageous embodiments, within said grooves said layers are shift in axial direction with respect to said axis of said grating mirror.

In particular, said one layer or said several layers are arranged on a top-side of a substrate.

In particular, said substrate comprises silica, for example fused silica.

Advantageously, said substrate comprises crystalline glass.

For example said substrate comprises sapphire.

Preferably, said substrate comprises Yttrium aluminium garnet (YAG, $Y_3Al_5O_{12}$), in particular undoped YAG..

In preferred embodiments, said top-side has an essentially planar top-surface on which said on layer or said several layers are attached.

Advantageously said planar top-surface extends essentially in a plane which runs at least approximately perpendicular to said axis of said grating mirror.

Another advantages embodiment provides, that said top-side is structured, in particular with respect to said axis of said grating mirror rotational symmetrical structured.

Preferably in said structured substrate are grooves, in particular grooves which run essentially along circular lines around said axis of said grating mirror.

Preferably, said layers on said structured top-side are shaped essentially the same.

Said radiation field generating systems can be used for various applications.

According to a preferred embodiment, said radiation field generating system provides amplified radiation field pulses, in particular pulses corresponding to said first contribution to said amplified radiation field, on demand.

In some embodiments, said second contribution to said amplified radiation field is also used for further processing.

In preferred embodiments said amplified radiation field, in particular said first contribution to said amplified radiation field, is used for material processing.

Material processing comprises in particular cutting and/or drilling, preferably cutting of and/or drilling in metal and/or composites, in particular carbon fibre composites and/or transparent materials.

Material cutting is preferably performed with continuous wave radiation fields. In other advantageous embodiments, cutting is performed with pulsed radiation fields, which in particular possess an axial symmetric polarization, for example a radial polarization.

Material processing comprises for example surface structuring, in particular large area structuring.

In particular, material processing comprises laser ablation.

Material processing comprises further for example welding, in particular microwelding, for which continuous wave radiation fields are in particular advantageous.

Material processing comprises in particular also stimulating and controlling of chemical processes.

Further features and explanations with respect to the present invention are disclosed in connection with a detailed specification in the drawings.

In the drawings:

Fig. 1     shows a radiation field generating system according to a first embodiment;

Fig. 2     shows an amplifying device according to the first embodiment;

Fig. 3     shows schematically energy levels of a laser active medium and corresponding transitions;

Fig. 4     shows an emission spectrum of the laser active medium according to the first embodiment;

Fig. 5     shows a variation with time of intensities of a first and a second contribution to an introduced radiation field;

Fig. 6     shows a variation with time of a population inversion in the laser active medium and a variation with time of a first contribution to an amplified radiation field;

Fig. 7     shows a variation with time of intensities of the first and the second contribution to the introduced radiation field according to a second embodiment;

Fig. 8     shows a radiation field generating system according to a third embodiment;

Fig. 9     shows a radiation field generating system according to a fourth embodiment;

Fig. 10    shows a sectional view of an embodiment of a grating mirror;

Fig. 11    shows a sectional view of a variation of a grating mirror;

Fig. 12    shows a sketch of reflection properties of the grating mirror as function of the polarization of an incident radiation field and its wave length;

Fig. 13    shows a sectional view of a grating mirror according to another embodiment;

Fig. 14    shows a sectional view of a variation of a grating mirror according to another embodiment;

Fig. 15    shows a radiation field generating system according to a fifth embodiment;

Fig. 16    shows a variation with time of the population inversion in the laser active medium and a variation with time of the intensity of the first contribution to the amplified radiation field according to a sixth embodiment;

Fig. 17    shows a variation with time of the population inversion in the laser active medium and the variation with time of the intensity of the first contribution to the amplified radiation field according to a seventh embodiment;

Fig. 18    shows an emission spectrum of the laser active medium according to an eighth embodiment;

Fig. 19    shows an emission spectrum of the laser active medium according to a ninth embodiment;

Fig. 20    shows an emission spectrum of the laser active medium according to a tenth embodiment;

Fig. 21    shows an emission spectrum of the laser active medium according to an eleventh embodiment and

Fig. 22    shows an emission spectrum of the laser active medium according to twelfth embodiment.

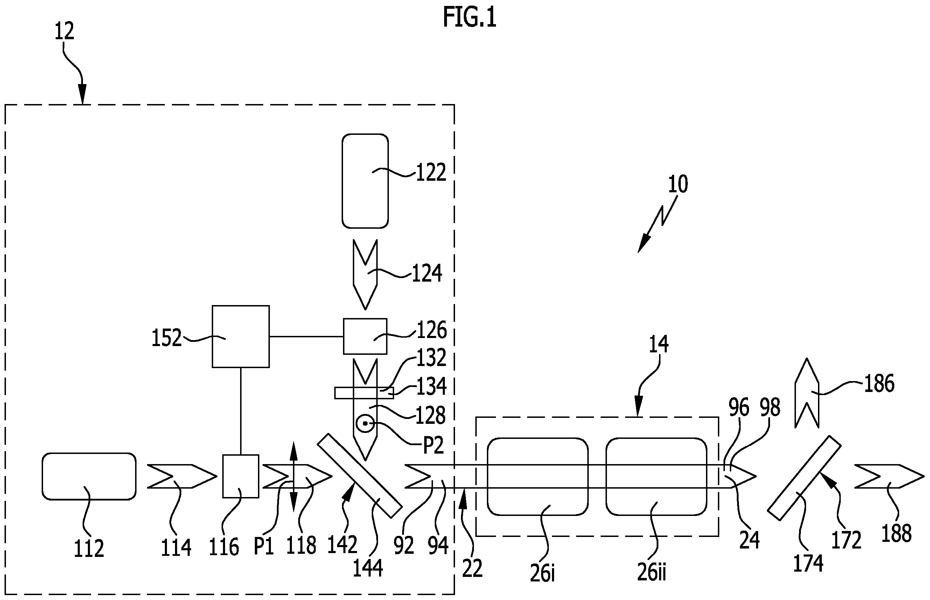

A first embodiment of a radiation field generating system 10 comprises a radiation field providing device designated in its entirety by 12 and a radiation field amplifying device designated in its entirety by 14 as it is sketched exemplarily in fig. 1.

A radiation field 22 is provided by radiation field providing device 12 and introduced into radiation field amplifying device 14.

Introduced radiation field 22 is amplified by radiation field amplifying device 14 and exits radiation field amplifying device 14 designated as amplified radiation field 24.

In particular, radiation field amplifying device 14 comprises several amplifying units 26i, 26ii, which are arranged in a row.

In particular, introduced radiation field 22 is introduced in a first amplifying unit 26i and exits first amplifying unit 26i designated as a first amplified radiation field 24i and is introduced as an introduced radiation field 22ii in an amplifying unit 26ii, which follows first amplifying unit 26i in the row.

Amplifying units 26i, 26ii are designed essentially in the same way and are described in the following together. The explicit notation with labels i, ii is omitted for the sake of clarity.

In a variation of the embodiment, radiation field amplifying device 14 comprises only one amplifying unit 26.

The radiation field 22 exits the last amplifying unit 26 of the row of amplifying units 26 designated as amplified radiation field 24.

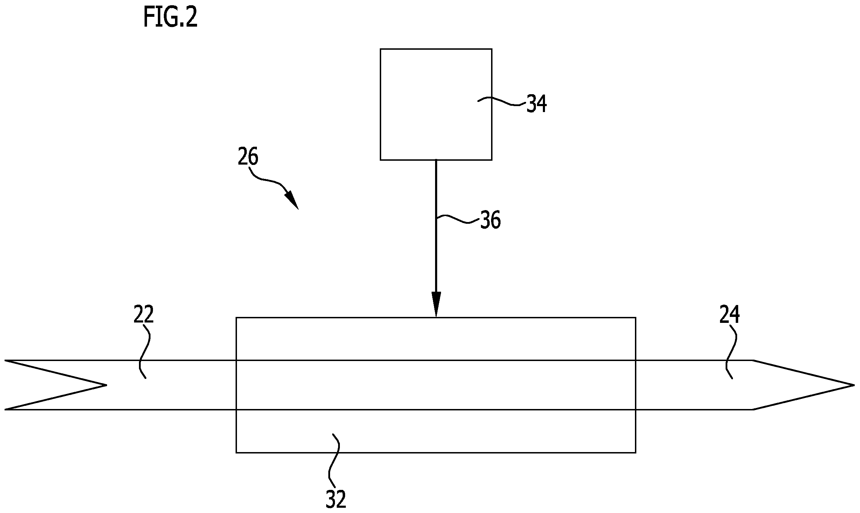

Radiation field amplifying device 14, in particular amplifying unit 26, comprises a laser active medium 32 and a source 34 of pumping energy 36 (fig. 2).

In particular, source 34 is a source of a pumping radiation field and the pumping radiation field provides pumping energy 36 to laser active medium 32.

Laser active medium 32 exhibits several states corresponding to different energy levels.

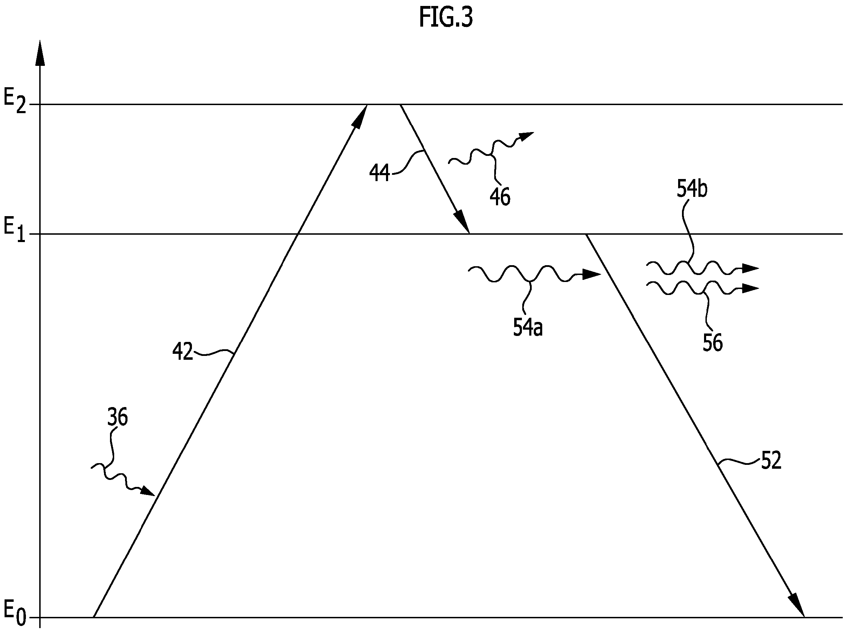

In particular laser active medium 32 possesses at least three states corresponding to energy levels E0, E1 and E2 (fig. 3).

E0 is the lowest energy level of the three energy levels E0, E1 and E2.

E2 is the highest energy level of the three energy levels E0, E1, E2.

The energy corresponding to energy level E1 is larger than the energy corresponding to energy level E0 and the energy corresponding to energy level E1 is smaller than the energy corresponding to energy level E2.

There exists a transition 42 from the state corresponding to energy level E0 to the state corresponding to energy level E2.

Pumping energy 36 is adjusted such that it induces transition 42 and accordingly increases a population of the state corresponding to energy level E2.

The state corresponding to energy level E2 is in particular an unstable state.

There exists a transition 44 from the state corresponding to energy level E2 to the state corresponding to energy level E1.

Transition 44 corresponds for example to a relaxation process.

By releasing an energy 46, which essentially corresponds to the energy difference between energy levels E2 and E1, transition 44 takes place and a population of the state corresponding to energy level E1 is increased whereas the population of the state corresponding to energy level E2 is decreased.

For example, energy 46 is released as heat and diffuses through laser active medium 32.

From the state corresponding to energy level E1 to the state corresponding to energy level E0 exists a transition 52, which is a laser active transition 52.

The state corresponding to energy level E1 is an excited state of laser active transition 52 and the state corresponding to energy level E0 is a non-excited state of laser active transition 52.

Laser active transition 52 is for example induced by stimulated emission.

A stimulating photon 54 of introduced radiation field 22 stimulates transition 52.

Introduced radiation field 22 and laser active medium 32 are selected and adjusted such that the energy of stimulating photons 54 essentially corresponds to the energy difference between the excited state of laser active transition 52 and the non-excited state of laser active transition 52.

By stimulating laser active transition 52 a photon 56 is emitted.

Emitted photon 56 possesses the same characteristics, in particular the same frequency, the same phase, the same polarization and the same spatial direction of propagation, as stimulating photon 54.

Accordingly, introduced radiation field 22 is amplified in a coherent way and exits amplifying unit 26 coherently amplified, designated as amplified radiation field 24.

In fig. 3 stimulating photon 54 is sketched twice, once as stimulating photon 54a before the stimulated emission and once as photon 54b together with emitted photon 56 after the stimulated emission.

By introducing pumping energy 36, in particular via transitions 42 and 44, the population of the excited state of laser active transition 52, that is for example the state corresponding to energy level E1, is increased such that the population in the excited state of the laser active transition 52 is higher than the population in the non-excited state of the laser active transition 52, that is for example the state corresponding to energy level E0.

Accordingly by introducing pumping energy 36 a population inversion at the laser active transition 52 is induced and therefore in particular stimulated emission by stimulating photons 54 are made possible.

By the stimulated emission via transition 52 the population of the excited state of laser active transition 52 is decreased and the population of the non-excited state of laser active transition 52 is increased.

Therefore by the stimulated emission in particular the increase of population of the excited state due to the introduction of pumping energy 36 is at least partly compensated.

Additionally, by introducing pumping energy 36 the population of the non-excited state of laser active transition 52, in particular the state corresponding to energy level E0, is kept low, such that a reabsorption of amplified radiation field 24 is kept at a low level and has essentially a negligible effect.

For example, for a more complex laser active medium 32 laser active transition 52 takes place between at least two bands of states.

The states within one band correspond to slightly different energy levels and accordingly laser active transition 52 between such bands can be stimulated by stimulating photons 54, the energy of which slightly varies.

For laser active transition 52 between bands of energy levels an amplification rate depends in particular on the wavelength and the polarization of stimulating photon 54 and hence on properties of introduced radiation field 22.

Radiation field providing device 12 provides introduced radiation field 22 with a first contribution 92 and a second contribution 94.

Accordingly, amplified radiation field 24 has a first contribution 96 corresponding to first contribution 92 to introduced radiation field 22 and a second contribution 98 corresponding to second contribution 94 to introduced radiation field 22.

The rate of amplification of contributions 92 and 94 to introduced radiation field 22 depends on the rate of stimulated emission which depends in particular continuously on the corresponding wavelengths l1 and l2 of contributions 92 and 94.

For example laser active medium 32 comprises an ytterbium (Yb) doped crystal, in particular Yb doped Yttrium aluminum garnet (Yb: YAG).

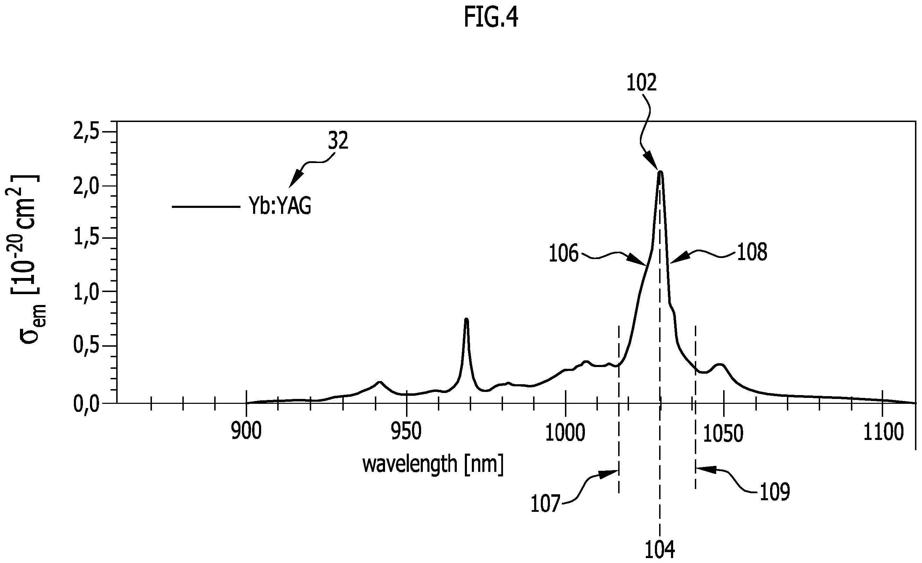

An emission spectrum shows the rate of emission of a medium for a particular wavelength of emitted radiation field. Exemplarily, fig. 4 the emission spectrum of Yb doped YAG is shown in terms of the emission cross section $\sigma_{em}$ as function of the wavelength of the emitted radiation field.

The emission spectrum as shown in fig. 4 exhibits a peak 102 at a peak wavelength 104, at which the emission cross section reaches its largest value within a broad interval of wavelengths, here within the interval bounded by the wavelengths corresponding to about 900 nm and 1.100 nm, with the value of the emission cross section at peak wavelength 104 is around 2,1 $10^{-20}$cm$^2$.

Peak 102 possesses a first shoulder 106 within an interval of wavelengths, which are smaller than peak wavelength 104 and are larger than a lower bound wavelength 107.

In the interval of wavelengths corresponding to first shoulder 106 the value of the emission cross section increases continuously upon increasing the value of the wavelength.

For example the value of lower bound wavelength 107 corresponds to 99 % of the value of peak wavelength 104.

In particular the value of lower bound wavelength 107 is about 10 nanometer smaller than the value of peak wavelength 104.

For example the value of the emission cross section increases by about a factor of 4 upon increasing the value of the wavelength within the interval corresponding to first shoulder 106, in particular upon increasing it from lower bound wavelength 107 to peak wavelength 104. For example, it increases from a value of about 0,5 $10^{-20}$ cm$^2$ to a value of about 2,1 $10^{-20}$ cm$^2$.

Peak 102 of the emission spectrum possesses a second shoulder 108 within an interval of wavelengths, which are larger than peak wavelength 104 and are smaller than a higher bound wavelength 109.

The emission cross section decreases continuously upon increasing the wavelength within the interval of wavelengths corresponding to second shoulder 108.

For example the value of the emission cross section decreases to about one fourth of the value of the emission cross section at peak wavelength 104 within the interval of wavelengths corresponding to second shoulder 108.

In particular the value of the emission cross section at higher bound wavelength 109 is about one fourth of the value of the emission cross section at peak wavelength 104.

For example the value of higher bound wavelength 109 is about 101 % of the value of peak wavelength 104.

In particular the value of higher bound wavelength 109 is about 10 nm larger than the value of peak wavelength 104.

First contribution 92 and second contribution 94 to introduced radiation field 22 are different in at least one characteristic property.

In this embodiment first and second contributions 92 and 94 to introduced radiation field 22 have different polarization states.

Preferably polarization directions P1 and P2 are at least approximately perpendicular to each other.

First contribution 92 to introduced radiation field 22 has a wavelength l1 and second contribution 94 to introduced radiation field 22 has a wavelength 12.

In the present embodiment, in which the polarization states of the contributions 92 and 94 are different, wavelength l1 and l2 of contributions 92 and 94 to introduced radiation field 22 are at least approximately the same.

In other variations of the embodiment wavelengths l1 and l2 of contributions 92 and 94 to introduced radiation field 22 are different.

For example, wavelength l1 of first contribution 92 to introduced radiation field 22 corresponds at least approximately to peak wavelength 104 of laser active medium 32.

In some variations of the embodiment wavelength l2 of second contribution 94 to introduced radiation field 22 is smaller than wavelength l1 of first contribution 92.

For example, wavelength l2 of second contribution 94 to introduced radiation field 22 lies within the interval corresponding to first shoulder 106.

For example the value of the wavelength l2 of the second contribution 94 is at least approximately 99,5 % of the value of wavelength l1 of first contribution 92.

In some variations of the embodiment wavelength l1 and l2 of first and second contributions 92 and 94 to introduced radiation field 22 differ by at least approximately 5 nm.

In the present embodiment radiation field providing device 12 comprises a first source 112 of a first initial radiation field 114, which is modulated by a first modulator 116, to provide a first seed radiation field 118 and a second source 122 of a second initial radiation field 124, which is modulated by a second modulator 126, to provide a second seed radiation field 128.

First source 112 emits first initial radiation field 114, in particular first source 112 is a source of a laser beam, which is the first initial radiation field 114.

Preferably first initial radiation field 114 is a pulsed radiation field with a repetition rate r1.

For example repetition rate r1 is about 40 MHz $\pm$ 20 MHz.

Initial radiation field 114 has a wavelength l1, which for example is at least approximately the peak wavelength 104 of laser active medium 32.

Modulator 116 modulates initial radiation field 114.

For example modulator 116 is an acousto-optic modulator.

With modulator 116 initial radiation field 114 is switchable between different operational modes and accordingly modulator 116 provides initial radiation field 114 in different operational modes, designated as first seed radiation field 118.

In particular modulator 116 provides first seed radiation field 118 in a high mode and a low mode with the intensity of first seed radiation field 118 in the high mode being larger than in the low mode.

Preferably the intensity of first seed radiation field 118 in the high mode is essentially the same as the intensity of initial radiation field 114.

For example the intensity of first seed radiation field 118 in the low mode is essentially zero that is in particular an effect of first seed radiation field 118 in the low mode introduced in radiation field amplifying device 14 is negligible small.

For example, in a state of modulator 116 in which it provides first seed radiation field 118 in the high mode, first initial radiation field 114 runs through first modulator 116 essentially undisturbed.

For example in a state of modulator 116 in which it provides first seed radiation field 118 in the low mode, first modulator 116 diffracts first initial radiation field 114 and first seed radiation field 118 corresponds only to a negligible small contribution of first initial radiation field 114, which passes modulator 116 in the case that its diffraction efficiency is not exactly 100 %.

First seed radiation field 118 has the wavelength l1 and is polarized with a polarization direction P1.

A variation of the present embodiment comprises an additional polarization selecting element to provide first seed radiation field 118 polarized with polarization direction P1.

Second source 122 and second modulator 126 are built essentially the same as first source 112 and first modulator 116, respectively.

In order to avoid repetitions, for the description of second source 122 and second modulator 126 reference is made to the above description of first source 112 and first modulator 116, respectively, insofar as second source 122 and first source 112 and second modulator 126 and first modulator 116, respectively, are built the same and insofar in the following description of second source 122 and second modulator 126 nothing else is stated.

Second source 122 emits second initial radiation field 124.

In particular second source 122 is a source of a laser beam, which is the second initial radiation field 124.

For example the intensity of second initial radiation field 124 is essentially constant in time, in particular second initial radiation field 124 is a continuous wave (CW) laser.

Second modulator 126 modulates second initial radiation field 124 and provides second initial radiation field 124 designated as second seed radiation field 128 in different operational modes.

In particular, second modulator 126 provides second seed radiation field 128 in a high mode and in a low mode with the intensity of second seed radiation field 128 in the high mode being larger than its intensity in the low mode.

For example, the intensity of second seed radiation field 128 in the high mode corresponds to the intensity of second initial radiation field 124.

In particular the intensity of second seed radiation field 128 in the low mode is essentially zero in the sense that an effect of second seed radiation field 128 in the low mode in radiation field amplifying device 14 has a negligible small effect.

Second initial radiation field 124 and accordingly second seed radiation field 128 have the wavelength l2 corresponding to second contribution 94 to introduced radiation field 22.

In particular, radiation field providing device 12 comprises a polarization adjusting unit 132 to adjust the polarization state of second seed radiation field 128.

In the present embodiment polarization adjusting unit 132 comprises a polarization rotating element 134, for example a half-wave plate.

With polarization adjusting unit 132 the polarization state of second seed radiation field 128 is adjusted.

Polarization adjusting unit 132 provides second seed radiation field 128 in the polarization state corresponding to the one of second contribution 94.

In particular, polarization rotating element 134 rotates the polarization direction of second seed radiation field 128 such that the polarization direction of second seed radiation field 128 corresponds essentially to direction P2.

Furthermore, radiation field providing device 12 comprises an introducing unit 142.

Introducing unit 142 introduces radiation field 22 into radiation field amplifying device 14.

In particular, first and second seed radiation fields 118 and 128 are provided to introducing unit 142 and introducing unit 142 joints first and second seed radiation fields 118 and 128 to provide them as introduced radiation field 22.

Accordingly, first seed radiation field 118 corresponds to first contribution 92 and second seed radiation field 128 corresponds to second contribution 94.

For example, introducing unit 142 comprises a thin-film polarizer 144.

The reflection properties and transmission properties of thin-film polarizer 144 depend on the polarization state, in particular on the polarization direction, of an incident radiation field.

For example, thin film polarizer 144 is highly reflective for radiation fields with polarization direction P2 and transmits radiation fields with polarization direction P1.

In particular, thin film polarizer 144 has a first side and a second side which are oppositely to each other arranged.

In the present embodiment, first seed radiation field 118 is incident on the first side of thin-film polarizer 144, passes through thin-film polarizer 144 and exits at the second side of thin-film polarizer 144.

On the other hand, second seed radiation field 128 is incident on the second side of thin-film polarizer 144 and is reflected by the second side of thin-film polarizer 144.

Thin-film polarizer 144 is orientated such that transmitted first seed radiation field 118 and reflected second seed radiation field 128 are propagating into the same direction towards radiation field amplifying device 14.

Radiation field providing device 12 comprises also a coordinating device 152.

Coordinating device 152 coordinates the operation of first and second modulators 116, 126.

In particular, the operation of second modulator 126 is coordinated by coordinating device 152 based on the operation of first modulator 116.

For example, if first modulator 116 provides first seed radiation field 118 in the high mode coordinating device 152 coordinates that second modulator 126 provides second seed radiation field 128 in the low mode and if first modulator 116 provides first seed radiation field 118 in the low mode coordinating device 152 coordinates that second modulator 126 provides second seed radiation field 128 in the high mode.

Accordingly, coordinating device 152 coordinates, that one of first and second seed radiation fields 118, 128 is provided in the high mode and the other one is provided in the low mode.

By the coordinated provision of first and second seed radiation fields 118 and 128, which correspond to first and second contributions 92 and 94 to introduced radiation field 22, introduced radiation field 22 is provided essentially without dead times.

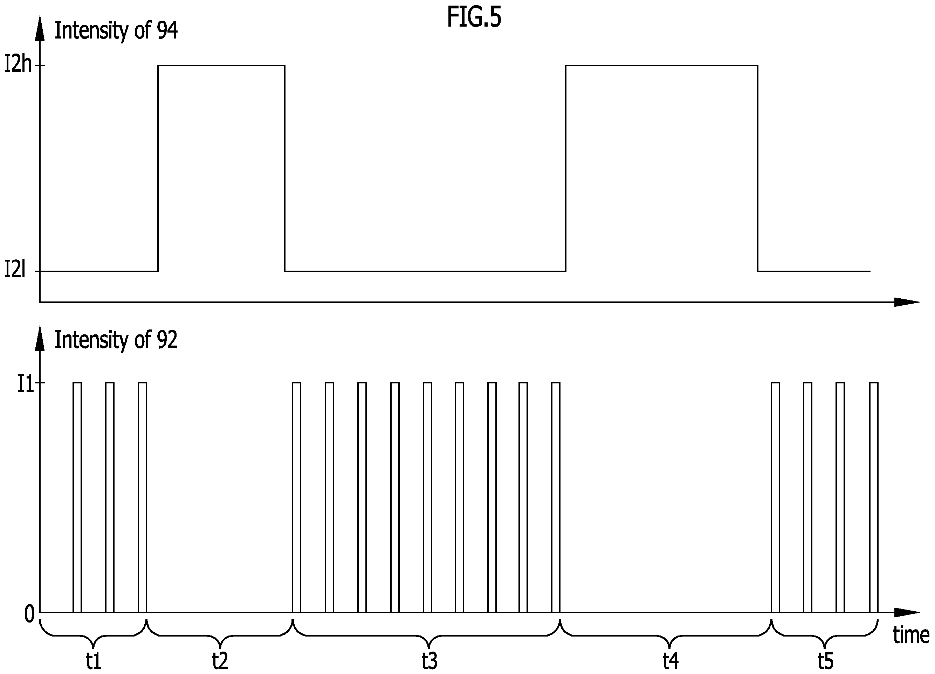

As an example, in fig. 5 a variation with time of the intensities of first contribution 92 and second contribution 94 to introduced radiation field 22 is sketched.

For example, in a first time period t1 first seed radiation field 118 and accordingly first contribution 92 are provided in the high mode and second seed radiation field 128 and accordingly second contribution 94 are provided in the low mode.

In first time period t1 several, for example three, pulses of first contribution 92 are provided, each of which has an intensity of about a pulse intensity I1.

The intensity of second contribution 94 in first time period t1 is essentially a low intensity I2l.

In particular, low intensity I2l is smaller than pulse intensity I1 of first contribution 92.

For example, low intensity I2l is essentially zero in the sense, that the intensity is zero or such small that effects of second contribution 94 in radiation field amplifying device 14 are negligible small.

In a variation of the embodiment low intensity I2l is small but second contribution 94 has an effect in radiation field amplifying device 14.

In a second time period t2, which follows first time period t1, first seed radiation field 118 and accordingly first contribution 92 are provided in the low mode.

For example the intensity of first contribution 92 is essentially zero in the sense that the intensity is zero or at least such small that an effect of first contribution 92 in radiation field amplifying device 14 is negligible small.

In time period t2 second seed radiation field 128 and accordingly second contribution 94 are provided in the high mode and the intensity of second contribution 94 is essentially a high intensity I2h, which is higher than low intensity I2l.

In the example sketched in fig. 5 time period t2 is followed by time period t3 in which first seed radiation field 118 and accordingly first contribution 92 is provided in the high mode and several pulses of first contribution 92, for example more pulses as within time period t1, are provided within time period t3.

Second seed radiation field 128 and accordingly second contribution 94 are in time period t3 provided in the low mode and accordingly the intensity of second contribution 94 is essentially the low intensity I2l in time period t3.

In the example shown in fig. 5 there is an additional time period t4 in which first seed radiation field 118 and accordingly first contribution 92 are provided in the low mode and second seed radiation field 128 and accordingly second contribution 94 are provided in the high mode with for example the time length of time period t4 is different to the time length of time period t2.

In the example another time period t5 follows the time period t4 with first contribution 92 being provided in the high mode and second contribution 94 being provided in the low mode in time period t5.

In a variation of the present embodiment it is also possible that only a single pulse of first seed radiation field 118 and accordingly of first contribution 92 is provided within a time period in which first contribution 92 is provided in the high mode.

Time periods in between the single pulses can have the same time length or preferably different time lengths.

In the time periods between the single pulses of first contribution 92 second contribution 94 is provided in the high mode and in the time periods, in which the single pulses are provided, second contribution 94 is provided preferably in this variation in the low mode.

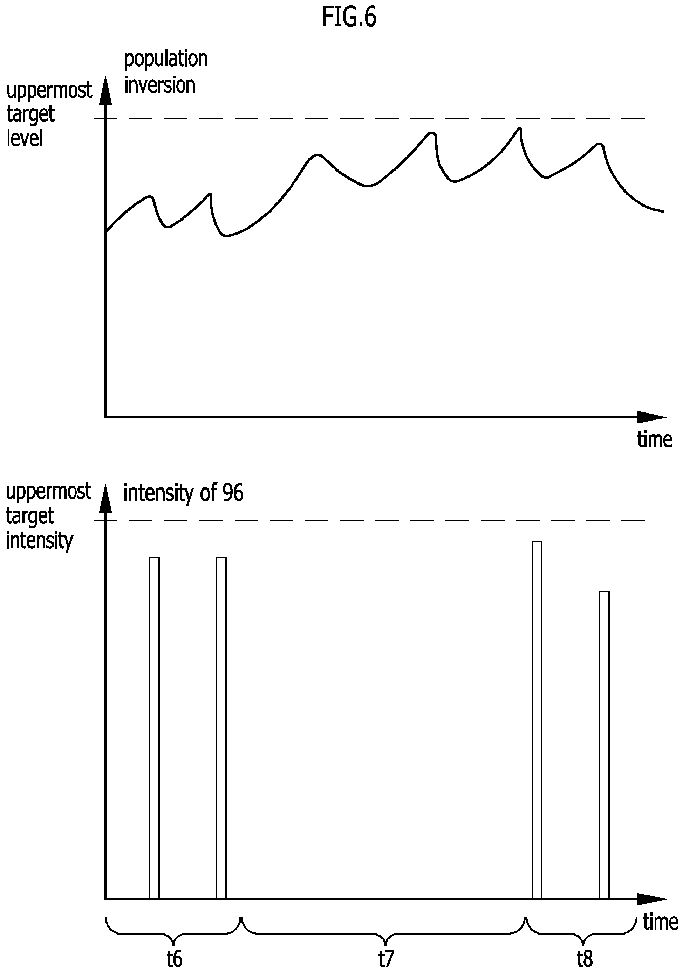

In the present embodiment and/or its variations coordinating device 152 coordinates first and second modulators 116, 126 to provide introduced radiation field 22 comprising its first and second contribution 92 and 94 with an intensity sufficiently high to stimulate enough laser active transitions 52 to keep the population inversion below an uppermost target level during all time periods of operation (fig. 6).

In particular, second modulator 126 is coordinated by coordinating device 152 to provide second seed radiation field 128 and accordingly second contribution 94 to introduced radiation field 22 such that the intensity of first contribution 96 to amplified radiation field 24 is kept below an uppermost target intensity independent of the operational mode in which first contribution 92 is provided and independent of the length of the before going time period, in which first contribution has been provided in another operational mode.

Exemplarily in fig. 6 the variation with time of the population inversion and the intensity of first contribution 96 to amplified radiation field 24 within three consecutive time periods t6, t7 and t8 is shown.

Within the time period t6 first contribution 92 to introduced radiation field 22 is provided in the high mode and several pulses of first contribution 92 are introduced into radiation field amplifying device 14.

In the time between the pulses of first contribution 92 to introduced radiation field 22 less stimulated transitions 52 occur and accordingly the population inversion increases.

Each of the pulses of first contribution 92 stimulates transitions 52 and therefore the population of the excited state of laser active transition 52 is reduced and accordingly the level of the population inversion decreases.

Due to the stimulated emission by first contribution 92 to introduced radiation field 22 within the time period t6 the population inversion stays below the uppermost target level.

In the time period t7, which is in particular longer than the time between two subsequent pulses of first contribution 92 to introduced radiation field 22 in the high mode, first contribution 92 is provided in the low mode and accordingly less laser active transitions 52 are stimulated by first contribution 92 to introduced radiation field 22.

In particular the amount of transitions 52, which are stimulated by first contribution 92 to introduced radiation field 22 is too small to compensate the energy provided by pumping energy 36 and to compensate the resulting increase of the population of the excited state.

In time period t7 second contribution 94 to introduced radiation field 22 is provided in the high mode and therefore laser active transitions 52 are stimulated by second contribution 94.

With the stimulated transitions 52 by second contribution 94 the population of the excited state is reduced and accordingly the population inversion is kept below an uppermost target level.

In time period t8, which follows the time period in which first contribution 92 to introduced radiation field 22 is provided in the low mode, first contribution 92 is provided in the high mode and the intensity of pulses of first contribution 96 to amplified radiation field 24 is below an uppermost target intensity, in particular because the population inversion is kept below an uppermost target level and therefore the amplification of first contribution 92 to introduced radiation field 22 is kept below an uppermost factor.

For example radiation field generating system 10 comprises also a splitting unit 172, which is arranged behind the radiation field amplifying device 14 to split first and second contributions 96, 98 to amplified radiation field 24.

Splitting unit 172 splits first and second contributions 96 and 98 to amplified radiation field 24 by their difference in at least one characteristic property.

For example, splitting unit 172 comprises a splitting element 174, the reflection and transmission characteristics of which depend on the polarization state of an incident radiation field.

For example, splitting element 174 is highly-reflective for radiation fields with polarization direction P1 and accordingly first contribution 96 to amplified radiation field 24 is reflected by splitting element 174.

For example, splitting element 174 is essentially transmissive for radiation fields with polarization direction P2 and accordingly second contribution 98 to amplified radiation field 24 passes through splitting element 174. Accordingly, first contribution 96 to amplified radiation field 24 is provided as first generated amplified radiation field 186 separately from second contribution 98 to amplified radiation field 24, which exits radiation field generating system 10 as second generated amplified radiation field 188.

In particular first contribution 96 to amplified radiation field 24 is provided as first generated amplified radiation field 186 for an application of said radiation field, in particular for processing of materials and, as a consequence of the preceding description, with pulses on demand and with an intensity below the uppermost target intensity.

According to a second embodiment second contribution 94 to introduced radiation field 22 is provided as a pulsed radiation field, in particular as a pulsed laser beam.

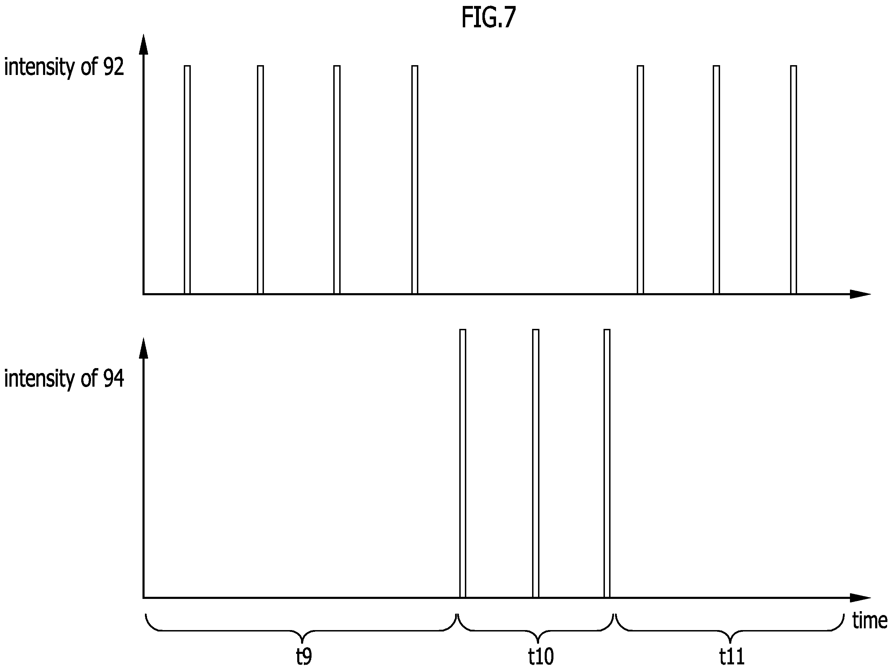

As an example, in fig. 7 a variation with time of the intensities of first and second contributions 92 and 94 to introduced radiation field 22 are shown.

In a time period t9 first contribution 92 is provided in the high mode and several pulses of first contribution 92 occur in time period t9.

In time period t9 second contribution 94 is provided in the low mode and no pulses of second contribution 94 occur within time period t9.

In a time period t10 which follows time period t9 first contribution 92 is provided in the low mode. In particular no pulses of first contribution 92 occur in time period t10, the duration of which is longer than the time between pulses of first contribution 92 in the high mode.

In time period t10, in which first contribution 92 is provided in the low mode second contribution 94 is provided in the high mode.

Accordingly, at least one, in particular several pulses of second contribution 94 to introduce radiation field 22 occur in time period t10.

In a time period t11 subsequent to time period t10 first contribution 92 is again provided in the high mode and second contribution 94 is provided in the low mode.

All other elements of the second embodiment not described explicitly are identical to one of the elements of the first embodiment such that regarding the description of these elements reference is made to the explanations given in connection with the first embodiment.

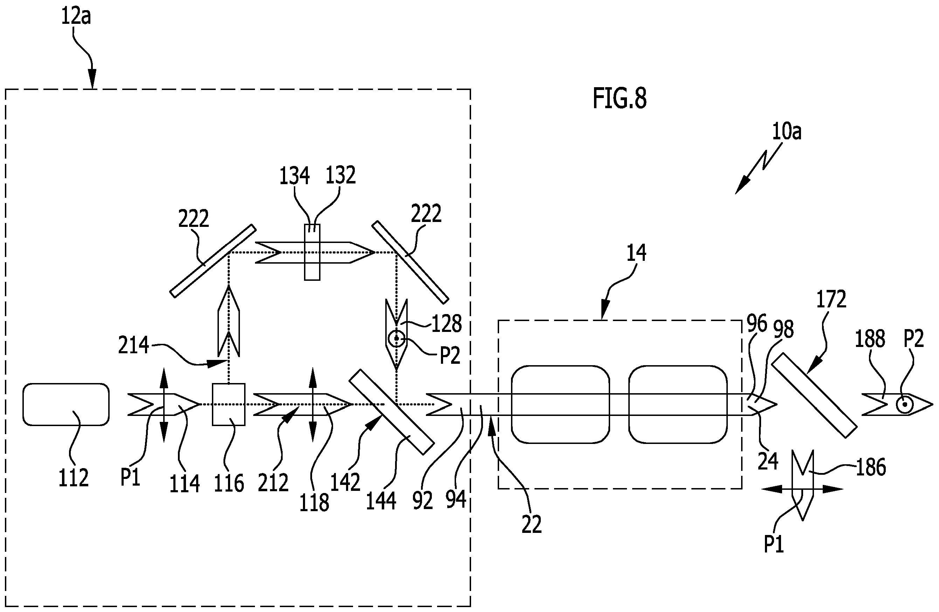

In a third embodiment of a radiation field generating unit 10a, which is shown exemplarily in fig. 8, these elements, which correspond to the first or second embodiment, are provided with the same reference sign and with respect to the description of these elements it is completely referred to the explanations given in connection with the first and second embodiment.

In contrast to the first and second embodiment radiation field providing device 12a according to the third embodiment comprises only one source 112 of an initial radiation field 114.

Initial radiation field 114 has a wavelength l1 and a particular polarization state, in particular initial radiation field 114 is polarized in a polarization direction P1.

Initial radiation field 114 is introduced into modulator 116. In particular, radiation field providing device comprises only this one modulator 116.

Modulator 116 is switchable between at least two states, for example between exactly two states.

In one state modulator 116 provides initial radiation field 114 essentially as first seed radiation field 118 in the high mode and in another state modulator 116 provides initial radiation field 114 essentially as second seed radiation field 128 in the high mode.

In particular, source 112 provides initial radiation field 114 in a timely regular manner, for example as periodically occurring pulses.

For example, modulator 116 essentially transmits initial radiation field 114 in one state to provide initial radiation field 114 essentially as first seed radiation field 118 and reflects initial radiation field 114 in the other state to provide it essentially as second seed radiation field 128.

Due to a transmission efficiency and reflection efficiency of less than 100 % in the respective state, a small amount of initial radiation field 114 may be reflected or may pass through modulator 116, respectively.

Accordingly, in the state in which modulator 116 essentially transmits initial radiation field 114 to provide it designated as first seed radiation field 118 in the high mode a small amount of initial radiation field 114 is reflected and is provided designated as second seed radiation field 128 in the low mode.

In particular in the other state in which first modulator 116 reflects initial radiation field 114 to provide it designated as second seed radiation field 128 in the high mode a small amount of initial radiation field 114 passes through modulator 116 and is provided designated as first seed radiation field 18 in the low mode.

In particular, modulator 116 guides initial radiation field 114 in one state to a first path way 212 and in the other state to a second path way 214.

Along first path way 212 initial radiation field 114 propagates as first seed radiation field 118 essentially unchanged to introducing unit 142.

Along second path way 214 initial seed radiation field 114 is guided, for example by radiation field guiding elements 222, as second seed radiation field 128 towards introducing unit 142.

Along second path way 214 a polarization adjusting unit 132 is arranged which for example comprises a polarization rotating element 134.

With polarization adjusting unit 132 the polarization state of second seed radiation field 128 is changed, for example the polarization direction is rotated to be polarization direction P2.

First and second seed radiation fields 118 and 128 are joint by introducing unit 142 and introduced designated as first and second contributions 92, 94 to introducing radiation field 22 into radiation field amplifying device 14.

Accordingly, in the present embodiment first and second contributions 92, 94 to introduced radiation field 22 stem from the same initial radiation field 114.

Advantageously, the time evolution of the intensity of introduced radiation field 22 is essentially the same as a time evolution of the intensity of initial radiation field 114 as provided by source 112.

Apart from the described elements, the remaining elements of the third embodiment are the same as those elements of the first and/or second embodiment so that with respect to these elements reference is made to the explanations given in connection with the first and second embodiment.

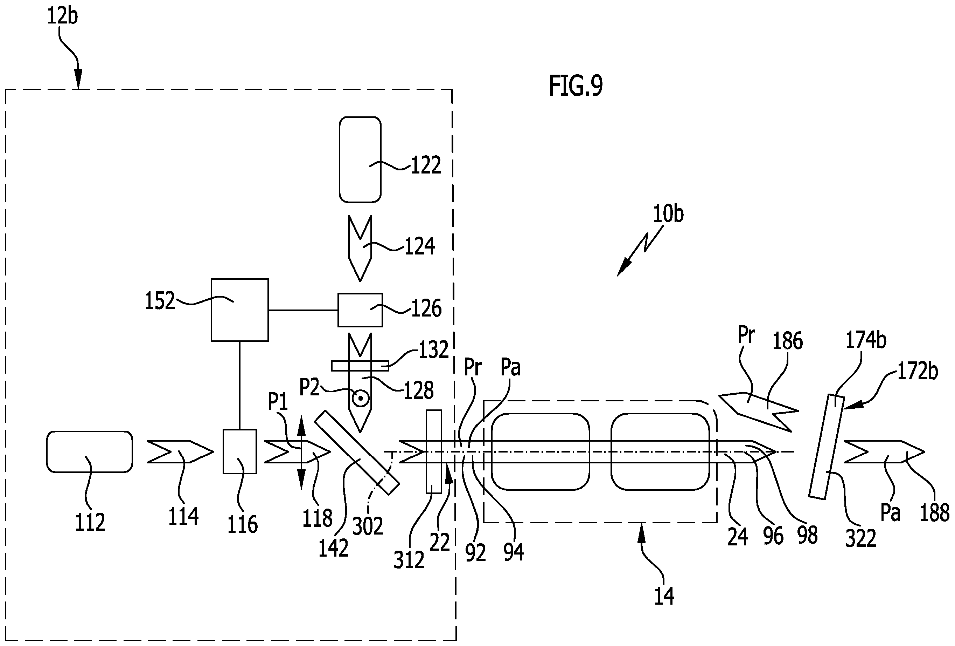

In a fourth embodiment of a radiation field generating system 10b, which is exemplarily shown in fig. 9, those elements which are identical to the ones of one of the preceding embodiments are provided with the same reference sign and with respect to the description of these elements it is completely referred to the explanations in connection with the preceding embodiment.

In the fourth embodiment a radiation field providing device 12b provides introduced radiation field 22 with first and second contributions 92 and 94 being in polarization states, which are with respect to an optical axis 302 axially symmetric.

Optical axis 302 is orientated with its axial direction essentially in the direction of propagation of introduced radiation field 22.

In particular optical axis 302 is an optical axis of radiation field generating system 10b, in particular of radiation field amplifying device 14.

For example, radiation field providing device 12b comprises first and second sources 112, 122 of first and second initial seed radiation fields 114, 124 which are modulated by first and second modulators 116, 126 to provide first and second seed radiation fields 118, 128 polarized with polarization directions P1 and P2, respectively, in particular as radiation field providing device 12 of the first embodiment.

First and second seed radiation fields 118, 128 are joint by an introducing unit 142.

Radiation field providing device 12b comprises further a polarization converting unit 312.

Polarization converting unit 312 is arranged between introducing unit 142 and radiation field amplifying device 14.

Radiation field converting unit 312 converts linearly polarized states of radiation field 22 to axial symmetrical polarization states.

In particular, polarization converting unit 312 converts the polarization state corresponding to the linear polarization with polarization direction P1 to a polarization state with radial polarization direction Pr.

In particular polarization converting unit 312 converts the polarization state corresponding to the linear polarization with polarization direction P2 into a polarization state with an azimuthal polarization Pa.

Therefore in the fourth embodiment first contribution 92 to introduced radiation field 22 is provided with a radial polarization Pr with respect to optical axis 302 and second contribution 94 to introduced radiation field 22 is provided with an azimuthal polarization Pa with respect to the optical axis 302.

Accordingly, first contribution 96 to amplified radiation field 24 is provided with radial polarization Pr and second contribution 98 to amplified radiation field 24 is provided with azimuthal polarization Pa.

In a variation of the embodiment first contributions 92 and 96 to introduced and amplified radiation field 22, 24, respectively, possess an azimuthal polarization Pa and second contributions 92 and 96 to introduced and amplified radiation field 22, 24, respectively, possess a radial polarization Pr.

Splitting unit 172b comprises a splitting element 174b, which splits the contributions 96, 98 of amplified radiation field 24 with respect to their axial symmetrical polarization states.

For example, splitting element 174b is designed as a grating mirror 322 which exhibits sub-wavelength gratings.

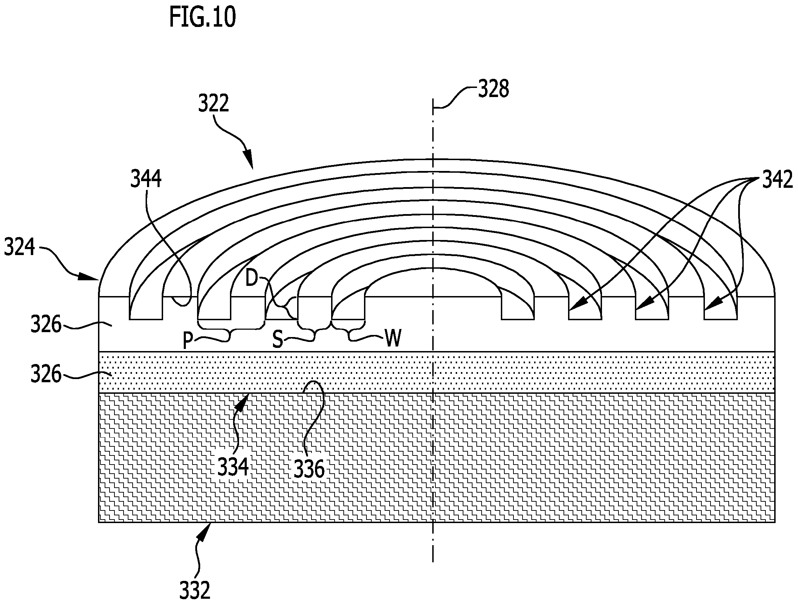

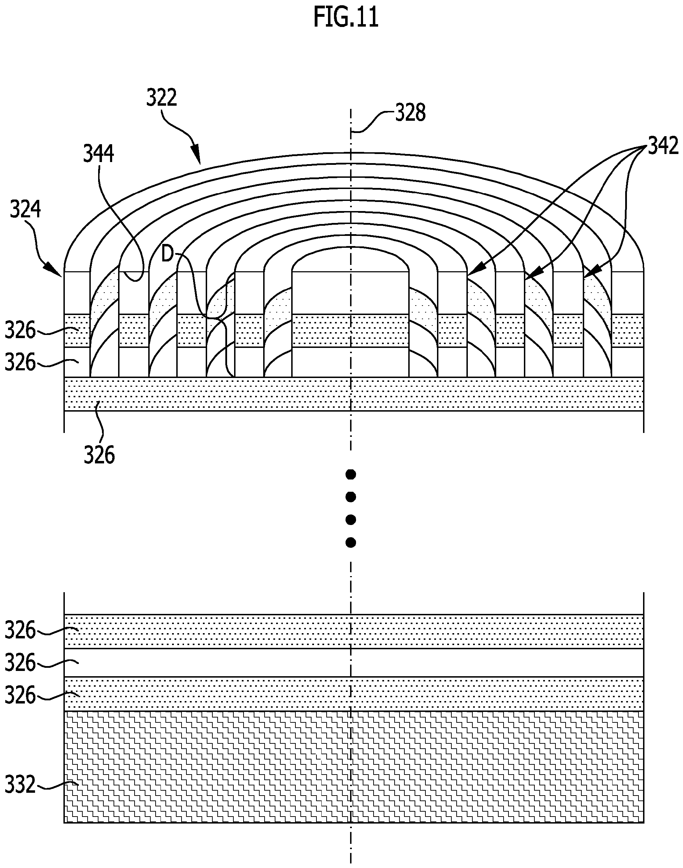

Variations of grating mirror 322 are exemplarily shown in fig. 10 and fig. 11.

Grating mirror 322 possesses a structured side 324.

In particular, grating mirror 322 is at structured side 324 essentially reflective for contribution 96 to amplified radiation field 24 with radial polarization Pr which is incident on structured side 324.

For example, contribution 98 to amplified radiation field 24 with azimuthal polarization Pa, which is incident on structured side 324, passes essentially through grating mirror 322.

In the present embodiment, grating mirror 322 comprises several layers 326, for example two layers 326. In a variation of the embodiment grating mirror 322 comprises eleven layers 326.

Layers 326 are consecutively arranged in axial direction with respect to an axis 328 of grating mirror 322.

Layers 326 are arranged on a substrate 332.

In particular, layers 326 are arranged on a top-side 334 of substrate 332 which in particular extends essentially in a plane which runs at least approximately perpendicular to axis 328 of grating mirror 322.

For example, a top-surface 336 of top-side 334, on which the layers 326 are arranged, is essentially planar. Top-surface 336 extends preferably within a plane, which is at least approximately perpendicular to axis 328 of grating mirror 322.

For example, substrate 332 comprises silica, in particular fused silica.

Layers 326 extend essentially in planes which are at least approximately perpendicular to an axis 328 of grating mirror 322.

Preferably, layers 326 are stacked on substrate 332.

Layers 326 have for example alternately a high refractive index n1 and a low refractive index n2.

In particular, layers 326 are designed essentially as quarter wave layers with respect to amplified radiation field 24.

In particular, a thickness of the layers 326, which is measured in axial direction with respect to grating mirror axis 328, multiplied with the refractive index n of the respective layer is at least approximately one quarter of the wave length, for example l1, of amplified radiation field 24.

For example, one kind of layers 326 comprises $Ta_2O_5$ and another kind of layers 326 comprises $SiO_2$.

At structured side 324 grating mirror 322 has grooves 342, which extend from an uppermost surface 344 of structured side 324 in axial direction with respect to axis 328 into grating mirror 322.

In particular, uppermost surface 344 extends essentially in a plane which runs at least approximately perpendicular to axis 328 of grating mirror 322.

In particular, grooves 342 have a depth D which is measured as the extension of grooves 342 in with respect to grating mirror axis 328 axial direction from uppermost surface 344 into the interior of grating mirror 322.

For example, depth D is at least approximately 80 nm.

In the present embodiment, grooves 342 are free of any material.

Grooves 342 are arranged essentially rotational symmetric with respect to axis 328 of grating mirror 322.

In particular, grooves 342 run around axis 328 essentially along circular lines.

Preferably, with respect to an intersecting plane which contains axis 328 of grating mirror 322, in particular with respect to all such intersecting planes, grooves 342 have an essentially rectangular shaped cross section.

In with respect to grating mirror axis 328 radial direction grooves 342 have at least approximately the same width W.

In with respect to grating mirror axis 328 radial direction adjacent but separated grooves 342 have at least approximately the same distance S.

Grooves 342 are in particular arranged periodically in with respect to grating mirror axis 328 radial direction.

For example, a periodicity P = W + S is at least approximately 850 nm.

## A duty cycle C = S / P is for example at least approximately 0,5.

For example grooves 342 extend only in a first layer 326, with first layer 326 being the first layer 326 in axial direction with respect to grating mirror axis 328 and starting counting at uppermost surface 344.

In the variation of the embodiment grooves 342 penetrate through several layers 326.

Layers 326, which are not penetrated by grooves, possess preferably surfaces which are essentially planar and extend essentially in respective planes which run at least approximately perpendicular to axis 328 of grating mirror 322.

These layers 326 extend in particular in with respect to axis 328 of grating mirror 322 axial direction between two such planar surfaces.

Advantageously, grating mirror 322 possesses a reflection coefficient for contribution 96 to amplified radiation field 24 with radial polarization Pr which is larger than 0,99, in particular larger than 0,999.

Preferably, grating mirror 322 possesses a reflection coefficient for contribution 98 to amplified radiation field 24 with azimuthal polarization Pa which is smaller than 0,01, in particular smaller than 0,001.

The reflection coefficient of grating mirror 322 with subwavelength gratings depends in particular on the wavelength of radiation field 24, which is incident on grating mirror 322.

Accordingly, the reflection coefficient for contribution 96 with radial polarization Pr and reflection coefficient for contribution 98 with azimuthal polarization Pa can be adjusted by designing grating mirror 322.

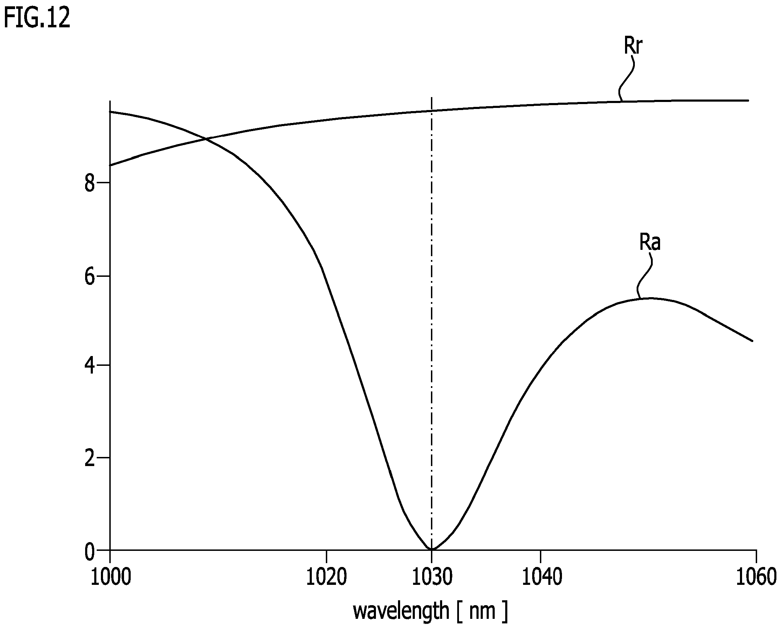

Exemplary variations of the reflectivity Rr for contribution 96 with radial polarization Pr and the reflectivity Ra for contribution 98 with azimuthal polarization Pa upon varying the wavelength are sketched in fig. 12.

For the present embodiment, at a wave length of about 1.030 nm a high extension ratio Rr / Ra of the reflectivities is achievable, for example the ratio Rr/Ra is larger than one hundred.

Amplified radiation field 24 is incident on structured side 324 of grating mirror 322 at an angle which is measured between the direction of propagation of incident amplified radiation field 24 and axis 328 of grating mirror 322.

Preferably, radiation field 24 is incident at a small angle A.

For example angle A is at least approximately one degree.

In particular first generated amplified radiation field 186 with radial polarization Pr is used in applications for drilling holes in materials.

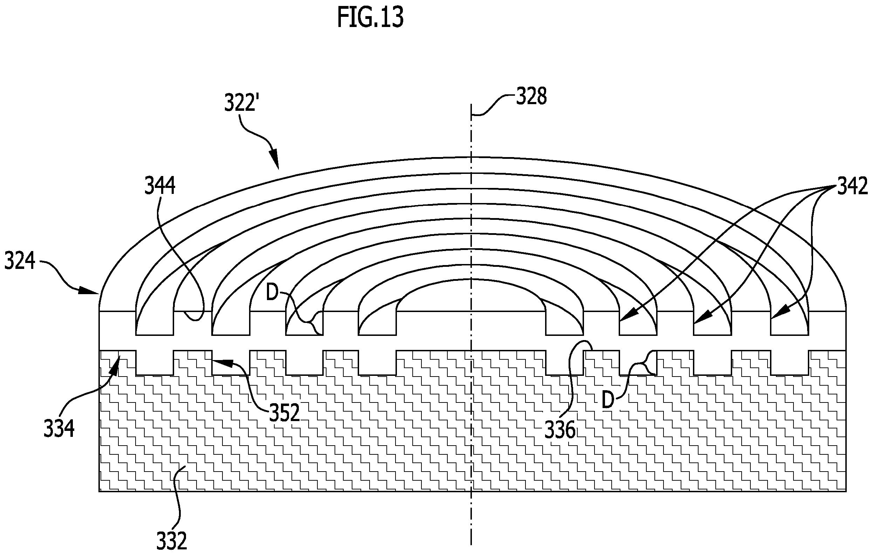

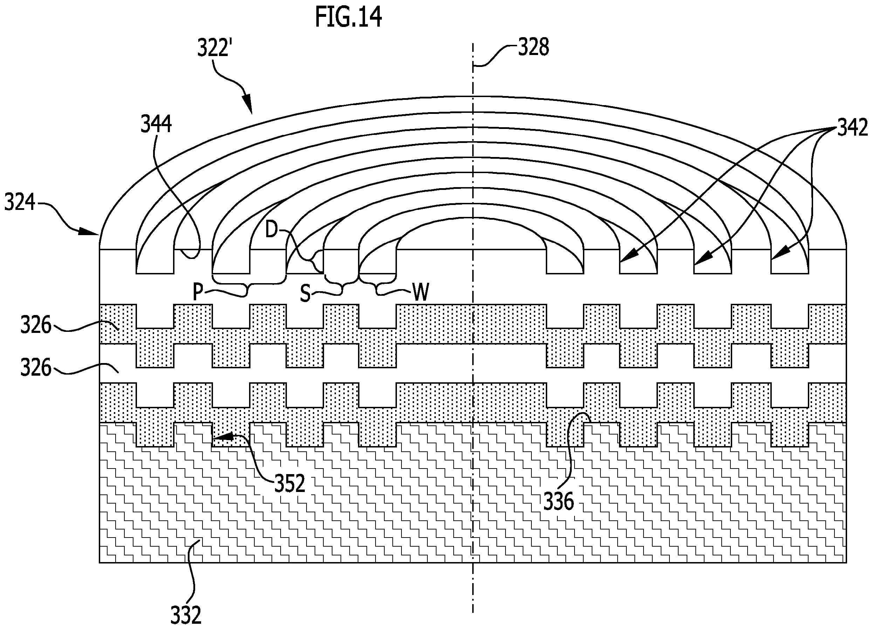

In another embodiment of a grating mirror 322', variations of which are exemplarily shown in fig. 13 and fig. 14, top-side 334 of substrate 332 is structured, in particular structured axial symmetrical with respect to axis 328.

Preferably, top-side 334 exhibits grooves 352, which extend from top-surface 336 in with respect to grating mirror axis 328 axial direction into substrate 332.

In particular, grooves 352 in top-side 334 have one or several features, for example regarding the cross sectional shape and/or the dimensions of the depth, width, periodicity and/or duty cycle, described before in connection with grooves 342 at the uppermost surface 344 and reference is made to the preceding explanations.

One or several layers 326 are arranged, in particular stacked, on top-side 334 of substrate 332.

In particular, the surfaces between which layers 326 extend in with respect to grating mirror axis 328 axial direction are shaped essentially as the surface of top-side 334.

Preferably, the interfaces between the layers 326 are shaped essentially as the surface of top-side 334.

Accordingly, in particular, layers 326 are shifted at radial positions of grooves 352 in with respect to grating mirror axis 328 axial direction, for example about an offset which is at least approximately the depth D of grooves 352.

In particular, first layer 326 exhibits grooves 342, which have essentially the same features as the grooves 352 in top-side 334.

Elements and features of this other embodiment of a grating mirror which are not explained explicitly correspond to those of the first explained embodiment of a grating mirror and reference is made to the preceding explanation in connection with that embodiment.

Elements of the fourth embodiment of a radiation field generating system which are not explained explicitly correspond to those of one of the preceding embodiments so that with respect to the description of these elements reference is made to the explanations given in connection with the preceding embodiments.

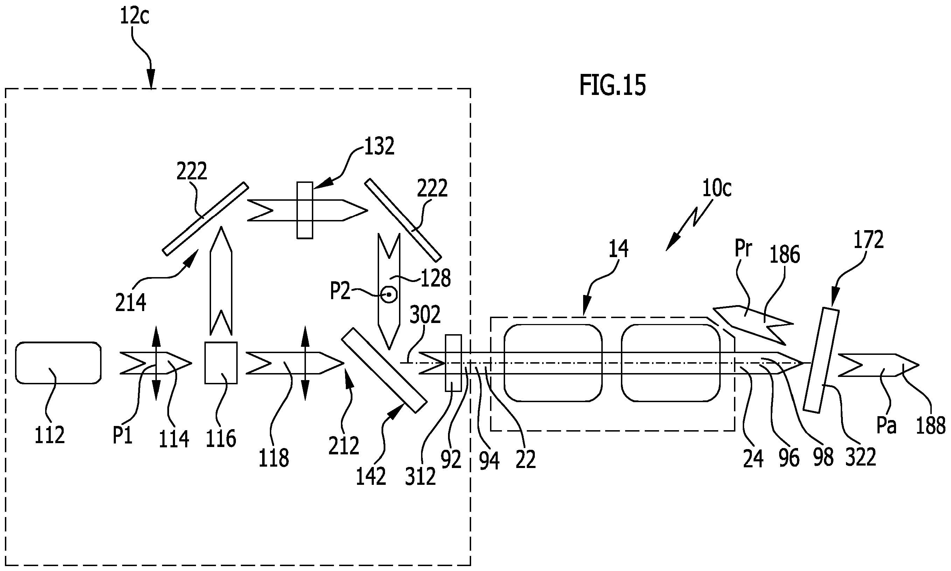

In a fifth embodiment of a radiation field generating system 10c, which is exemplarily shown in fig. 15, those elements, which correspond to one of the preceding embodiments, are provided with the same reference signs and with respect to the description of these elements it is completely referred to the explanations given in connection with the preceding embodiments.

A radiation field providing device 12c according to the fifth embodiment provides introducing radiation field 22 with a first and second contribution 92 and 94 which are in with respect to optical axis 302 axial symmetrical polarization states.

In particular, first contribution 92 to introduced radiation field 22 has a with respect to optical axis 302 radial polarization Pr.

For example, second contribution 94 to introduced radiation field 22 has a with respect to optical axis 302 azimuthal polarization Pa.

Radiation field providing device 12c comprises only one source 112 of an initial seed radiation field 114.

In particular radiation field providing device 12c is essentially build in the same manner as radiation field providing device 12a of the third embodiment.

With, the in particular only one, modulator 116 initial radiation field 114 is guided depending on the state of modulator 116 along a first path 212 as first seed radiation field 118 or along a second path 214 as second seed radiation field 128, where along second path 214 the polarization of second seed radiation field 128 is changed by a polarization adjusting unit 132.

Accordingly, initial radiation field 114 is provided essentially either as first seed radiation field 118 or as second seed radiation field 128 to introducing unit 142.

Between introducing unit 142 and radiation field amplifying device 14 introduced radiation field 22 passes a polarization converting unit 312, which converts the polarization states, in particular the polarizations P1 and P2 of first and second contributions 92 and 94 of introduced radiation field 22, to axial symmetrical polarization states.

First and second contributions 96 and 98 of amplified radiation field 24 are separated by splitting unit 172, which in particular comprises a grating mirror 322.

Preferably, grating mirror 322 is designed as one of the embodiments explained in connection with the fourth embodiment.

All elements of the fifth embodiment which are not explained explicitly correspond to one of the elements of the preceding embodiments so that with respect to the description of these elements reference is made to the explanations given in connection with the preceding embodiments.

According to a sixth embodiment second contribution 92 to introduced radiation field 22, in particular second seed radiation field 28, is selected and adjusted such that a population inversion in radiation field amplifying device 14, in particular in laser active medium 32, is kept within a target band, which is bounded by above by a higher target level and bounded from below by a lower target level.

Advantageously, in the present embodiment the intensity of first contribution 96 to amplified radiation field 24, which corresponds to first contribution 92 of introduced radiation field 22, is kept within a band of intensities, which is bounded by above by a higher target intensity and bounded from below by a lower target intensity.

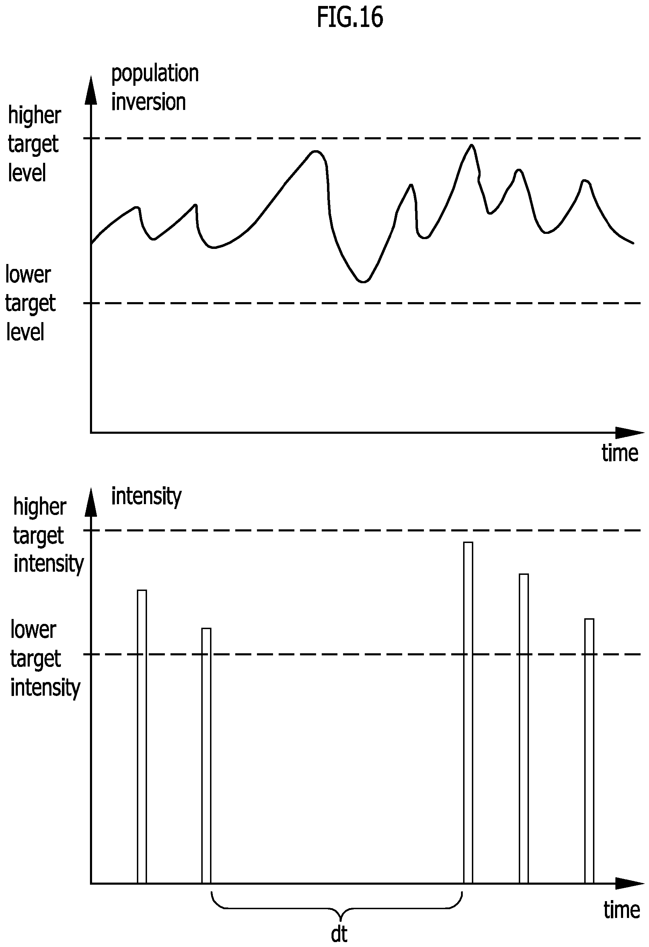

A variation with time of the population inversion and of the intensity of first contribution 96 to amplified radiation field 24 is exemplarily shown in fig. 16.

For example first contribution 92 to introduced radiation field 22 is provided as a pulsed radiation field and accordingly first contribution 96 to amplified radiation field 24 is provided as pulsed radiation field.

Within time intervals in which first contribution 92 to introduced radiation field 22 is provided, in particular in the high mode, the population inversion decreases, in particular after a pulse of first contribution 92, due to the stimulation of laser active transition 52 and pulses of first contribution 96 to amplified radiation field 24 occur.

In a time interval dt first contribution 92 to introduced radiation field 22 is provided in the low mode and accordingly the intensity of first contribution 96 to amplified radiation field 24 is small, for example essentially zero.

In time interval dt second contribution 94 to introduced radiation field 22 is provided in the high mode in such a manner, that enough transitions 52 are stimulated.

Due to stimulation of laser active transitions 52 by second contribution 94 the population inversion does not exceed the higher target level.

On the other hand second contribution 94 to introduced radiation field 22 is adjusted and selected such that not too much transitions 52 are stimulated and accordingly the population inversion is kept above the lower target level.

Advantageously, because the population inversion is kept during time period dt within the target band by introduction of second contribution 94, after the time period dt the intensity of pulses of first contribution 96 to amplified radiation field 24 occurring after the time interval dt is within the band of intensities between the lower target intensity and the higher target intensity.

All other elements of the sixth embodiment which are not explained explicitly are identical to one of the preceding embodiments and with respect to the explanation of these elements reference is made to the explanations given in connection with the preceding embodiments.

According to a seventh embodiment second contribution 94 to introduced radiation field 22, in particular second seed radiation field 128, is selected and adjusted such that the population inversion is kept essentially at a desired target level.

Advantageously, in the present embodiment the second contribution 94 to introduced radiation field 22, in particular second seed radiation field 128, is adjusted and selected such that the intensity of first contribution 96 to amplified radiation field 24 is kept essentially at a desired target intensity.

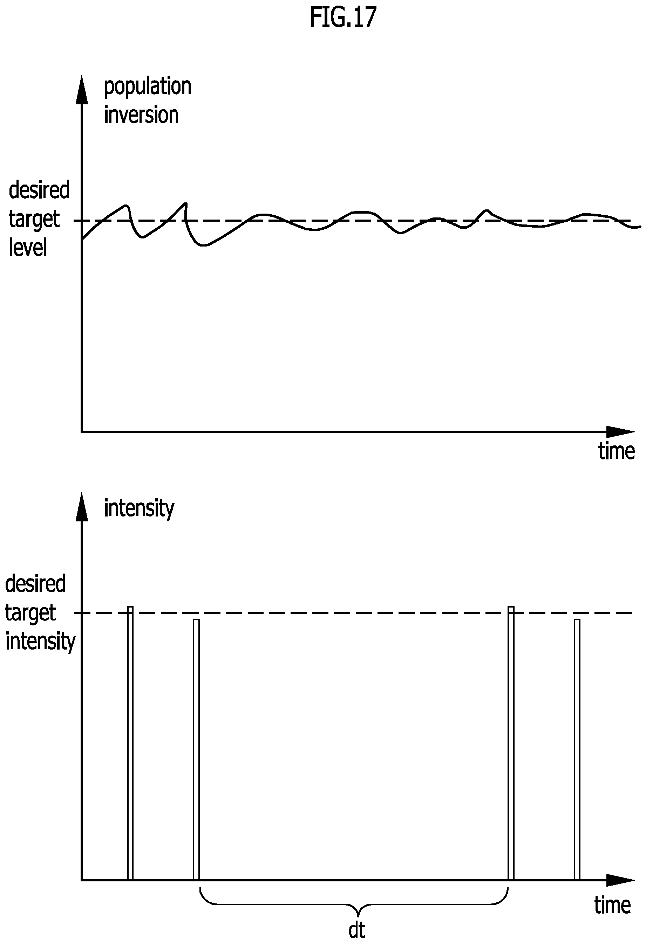

As an example, a time evolution of the population inversion and the intensity of first contribution 96 to amplified radiation field 24 is shown in fig. 17.

In particular first contribution 92 to introduced radiation field 22 is provided as a pulsed radiation field and accordingly first contribution 96 to amplified radiation field 24 is provided as pulsed radiation field.

In time intervals, in which first contribution 92 to introduced radiation field 22 is provided in the high mode due to the stimulation of laser active transitions 52 by first contribution 92 the population inversion is kept essentially at a desired target level and accordingly the intensity of first contribution 96 to amplified radiation field 24, in particular the intensity of its pulses, is essentially at the desired target intensity.

In a time interval dt first contribution 92 to introduced radiation field 22 is provided in the low mode and accordingly the intensity of first contribution 96 to amplified radiation field 24 is small, for example essentially zero.

In time interval dt, second contribution 94 to introduced radiation field 22 is provided in the high mode and stimulates transitions 52, in particular in the same manner and of the same amount as first contribution 92 to introduced radiation field 22 when provided in the high mode.

Due to the stimulation of transitions 52 by second contribution 92 in time interval dt the population inversion is essentially kept at the desired target level.

In a time interval following the time interval dt, in which first contribution 92 to introduced radiation field 22 has been provided in the low mode, first contribution 92 is again provided in the high mode and amplified essentially by the same factor as in the time interval before the time interval dt because the population inversion is kept essentially at the desired target level and accordingly the intensity of first contribution 96 to amplified radiation field 24 is essentially at the desired target intensity.

Elements of the seventh embodiment which are not explained explicitly are identical to elements of one of the preceding embodiments so that with respect to the description of these elements reference is made to the explanations given in connection with the preceding embodiments.

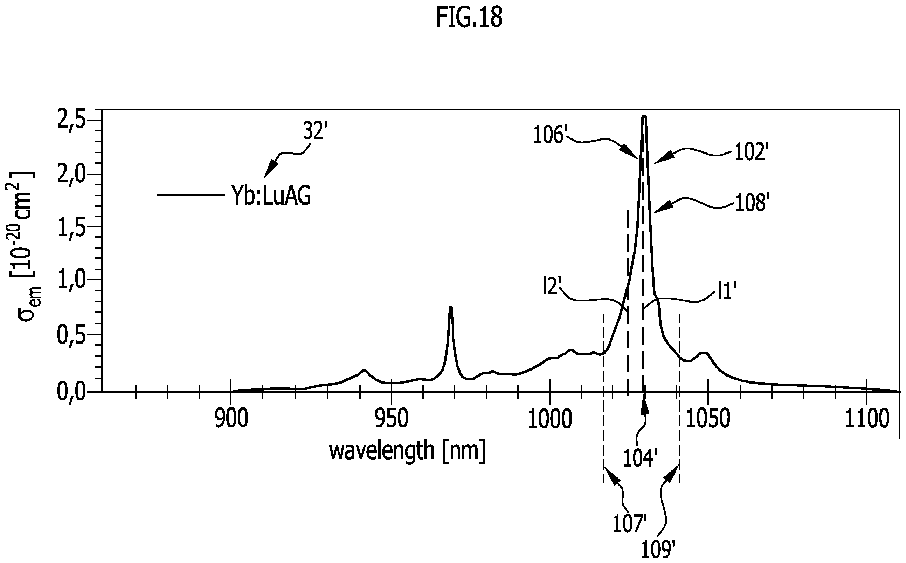

According to an eighth embodiment laser active medium 32' comprises lutetium aluminum garnet (LuAG) and ytterbium (Yb), in particular ytterbium doped lutetium aluminum garnet (Yb:LuAG), the emission spectrum of which is shown in fig. 18, in terms of the emission cross section as function of a wavelength of an emitted radiation field.

For laser active medium 32' the value of peak wavelength 104' is about 1030 nm and the value of lower bound wavelength 107' is about 12 nm smaller than the value of peak wavelength 104' and the value of higher bound wavelength 109' is about 12 nanometer higher than the value of peak wavelength 104'.

According to the present embodiment the value of the emission cross section is at peak wavelength 104' about $2{,}5 \cdot 10^{-20}$ cm$^2$ and the value of the emission cross section is at lower bound wavelength 107' and at higher bound wavelength 109' about 1/5 of its value at peak wavelength 104'.

In some variations of the embodiment the value of wavelength l2' of second contribution 94 to introduced radiation field 22 is about 5 nanometer smaller than the value of wavelength l1' of first contribution 92 to introduced radiation field 22.

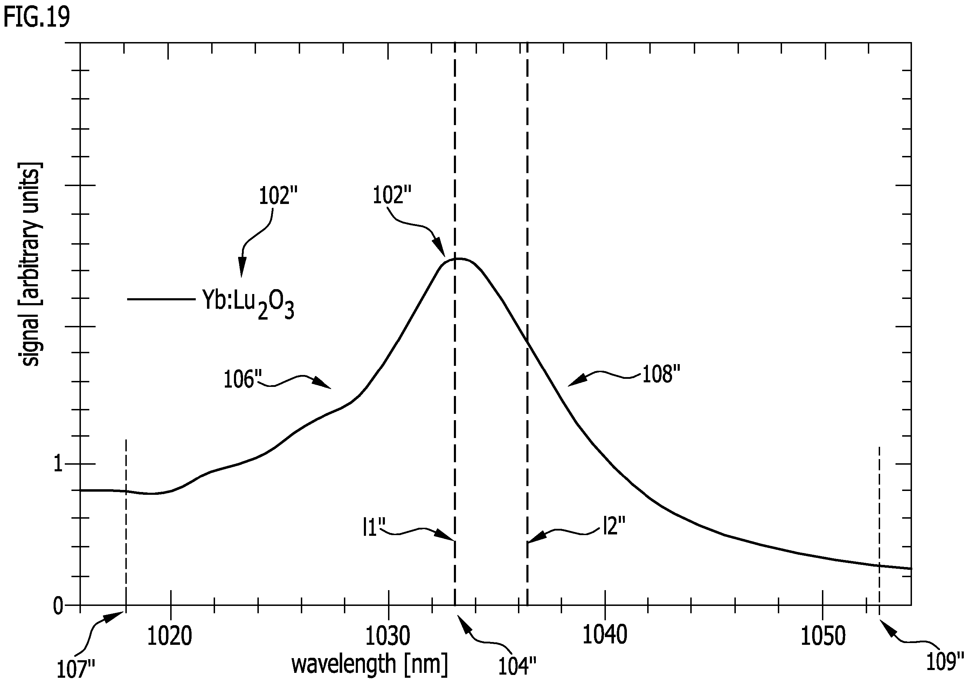

According to a ninth embodiment laser active medium 32" comprises lutetium (III) oxide ($Lu_2O_3$) and ytterbium, in particular Yb-doped lutetium (III) oxide, the emission spectrum of which is shown in fig. 19 in terms of a signal strength in arbitrary units, that its value is normalized to some reference signal strength, as function of a wavelength of an emitted radiation field.

The value of peak wavelength 104" is about 1033 nanometer.

The value of lower bound wavelength 107" is about 15 nanometer smaller than the value of peak wavelength 104" and in particular the strength of the signal reduces within the interval corresponding to first shoulder 106" by a factor of about 2,5.

The value of higher bound wavelength 109" is about 20 nanometer larger than the value of peak wavelength 104". That is the value of higher bound wavelength 109" is about 102 % of the value of peak wavelength 104".

The value of the signal strength decreases from its value at peak wavelength 104" to its value around higher bound wavelength 109" by a factor of about 7, such that in particular the decrease of the value of the signal strength from the value at peak wavelength 104" towards its value at the bound wavelengths 109" or 107" in the interval corresponding to second shoulder 108" is different to this decrease of the value of the signal strength in the interval corresponding to first shoulder 106".

For example the value of wavelength l1" of first contribution 92 to introduced radiation field 22 is about 1033 nanometer, which corresponds to the value of peak wavelength 104".

In some variations of the embodiment wavelength l1" and l2" of contributions 92 and 94 to introduced radiation field 22 are essentially the same.

In other variations of the embodiment the value of wavelength l2" of second contribution 92 to introduced radiation field 22 is larger than the value of wavelength l1".

For example the value of wavelength l2" lies in the interval corresponding to second shoulder 108" and is for example about 3 nanometer larger than the value of l1", such that the value of l2" is about 100,3 % of the value of l1".

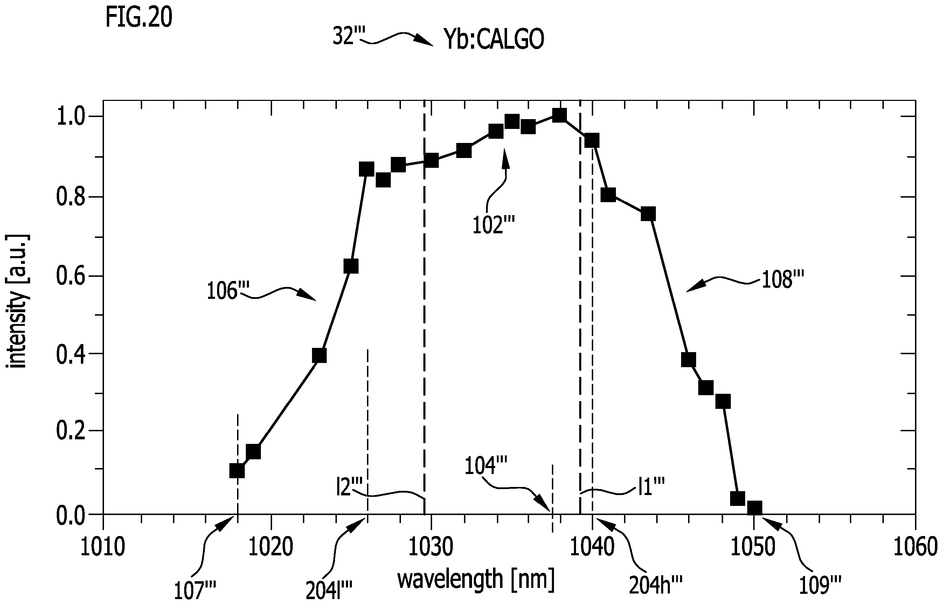

According to a tenth embodiment laser active medium 32''' comprises CALGO ($CaGdAlO_4$), in particular ytterbium doped CALGO, the emission spectrum of which is shown in fig. 20 in terms of an intensity, which is normalized to some reference value, as function of a wavelength of an emitted radiation field.

Peak 102''' is a broad peak, in the sense that in an interval of wavelengths, which are larger than a lower peak wavelength 104l''' and which are smaller than a higher peak wavelength 104h''', the value of the intensity of an emitted radiation field by laser active medium 32''' varies only slightly, for example this value varies only within a range of about 10 % of the value of the emitted intensity at peak wavelength 104'''.

For example the values of lower peak wavelength 104l''' and higher peak wavelength 104h''' differ with respect to each other by around 2 %, in particular these values differ by more than 10 nm and less than for example 20 nm and in the present embodiment they differ by about 14 nm.

The value of the emitted intensity decreases in the interval of wavelengths corresponding to first shoulder 106''' from a value corresponding to peak wavelength 104''' to a value at lower bound wavelength 107''', in particular the value of the emitted intensity reduces by a factor of about 9.

The value of emitted intensity decreases in the interval of wavelengths corresponding to second shoulder 108''' from the value at peak wavelength 104''' to a value at higher bound wavelength 109''' and the reduction is by about a factor of 100.

In some variations of the present embodiment wavelengths l1''' and l2''' corresponding to first and second contributions 92 and 94 to introduced radiation field 22, respectively, lie within an interval bounded by lower peak wavelength 104l and by higher peak wavelength 104h, such that the intensity of emitted radiation fields at wavelength l1'''

and at wavelength l2‴ differ by less than 10 % with respect to each other.

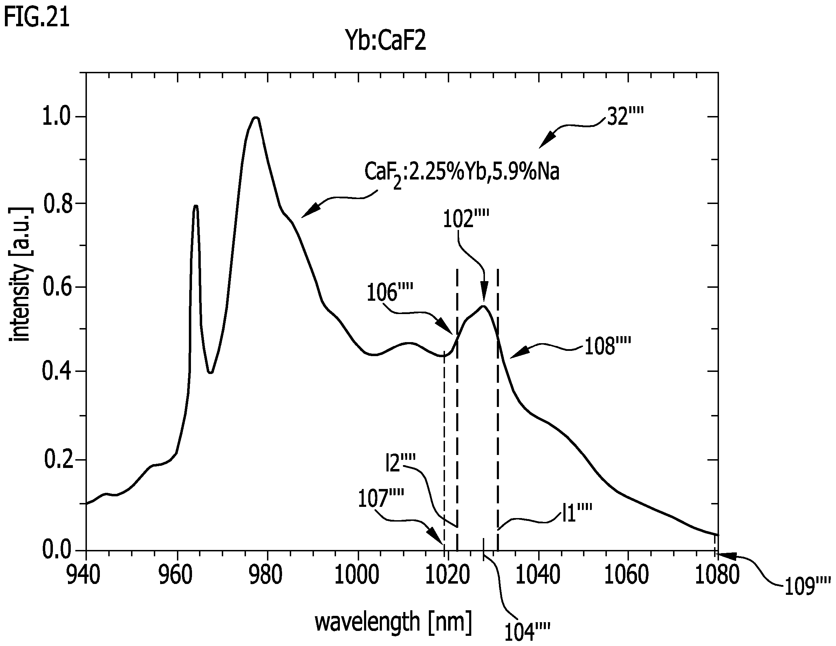

According to an eleventh embodiment laser active medium 32″″ comprises calcium fluoride (CaF$_2$), in particular yttrium (Yb) and sodium (Na) doped calcium fluoride, the emission spectrum of which is shown in fig. 21 in terms of an intensity of emitted radiation field normalized to an arbitrary reference intensity as function of a wavelength of an emitted radiation field.

Peak 102″″ is asymmetric in the sense, that the difference between the values of lower bound wavelength 107″″ and peak wavelength 104″″ and the difference between the values of higher bound wavelength 109‴ and peak wavelength 104″″ differ significantly, for example by a factor larger than 2 in particular in the present embodiment by a factor of about 7.

In the present embodiment the values of lower bound wavelength 107″″ and peak wavelength 104″″ differ by about 8 nm and the values of peak wavelength 104″″ and higher bound wavelength 109″″ differ by about 50 nm.

Peak 102″″ is asymmetric in the sense that the factors by which the intensity of the emitted radiation field reduces from its value at peak wavelength 104″″ to bound wavelengths 107″″ and 109″″, respectively, differ significantly, for example these factors differ by a factor of more than 2, in particular more than 4 and in the present embodiment these factors differ by about a factor of 10.

According to the present embodiment the intensity of emitted radiation field at lower bound wavelength 107″″ is about 80 % of its value at peak wavelength 104″″ and the value of the intensity of emitted radiation field at higher bound wavelength 109‴ is less than 10 % of its value at peak wavelength 104″″.

In some variations of the present embodiment the value of wavelength l1″″ of first contribution 92 to introduced radiation field 22 lies in the interval corresponding to second shoulder 108″″.

For example the value of wavelength l2″″ corresponding to second contribution 94 to introduced radiation field 22 lies within the interval of wavelengths corresponding to first shoulder 106″″.

In particular, the values of intensity of emitted radiation field at wavelength l2″″ and at wavelength l1″″ are about the same, for example the values differ by less than 5 % with respect to each other.

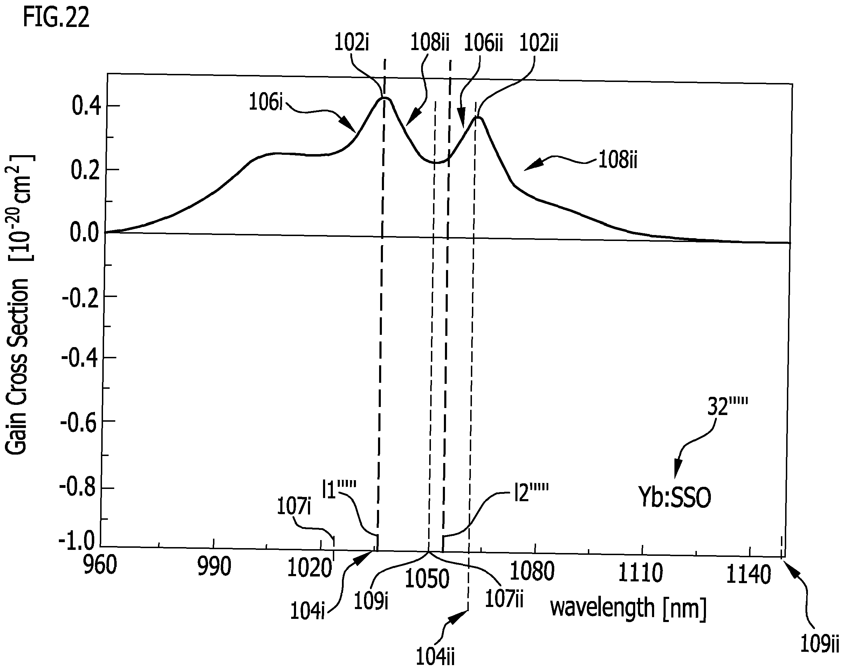

According to a twelfth embodiment laser active medium 32″″″ comprises SSO, in particular ytterbium doped SSO, the emission spectrum of which is shown in fig. 22 in terms of gain cross section, which is a measure of how much an introduced radiation field is amplified, as function of a wavelength of an emitted radiation field.

The emission spectrum according to the present embodiment possesses two peaks 102i and 102ii with first peak 102i located at a first peak wavelength 104i and second peak 102ii located at a second peak wavelength 104ii.

For example the values of first peak wavelength 104i and second peak wavelength 104ii differ by less than 5 % with respect to each other.

The value of gain cross section decreases monotonically upon decreasing the value of wavelength of emitted radiation field in an interval corresponding to a first shoulder 106i with the interval corresponding to first shoulder 106i being bounded by peak wavelength 104i and a first lower bound wavelength 107i, the value of which is smaller than the value of peak wavelength 104i.

The value of gain cross section decreases monotonically upon increasing the value of wavelength of emitted radiation field in an interval corresponding to a second shoulder 108i with the interval corresponding to second shoulder 108i being bounded by peak wavelength 104i and a first higher bound wavelength 109i, the value of which is larger than the value of peak wavelength 104i.

The value of gain cross section decreases monotonically from its value at peak wavelength 104ii of second peak 102ii upon decreasing the value of the wavelength of emitted radiation field in an interval corresponding to a first shoulder 106ii of second peak 102ii.

The interval corresponding to second shoulder 106ii is bounded by peak wavelength 104ii and a lower bound wavelength 107ii, the value of which is smaller than the value of peak wavelength 107ii.

The value of gain cross section decreases monotonically upon increasing the value of the wavelength of emitted radiation field in an interval corresponding to a second shoulder 108ii of second peak 102ii.

The interval corresponding to second shoulder 108ii is bounded by peak wavelength 104ii and a higher bound wavelength 109ii.

For example peak wavelength 104ii of second peak 102ii is larger than the value of peak wavelength 104i of first peak 102i.

In some variations of the present embodiment wavelength l1″″″ of first contribution 92 to introduced radiation field 22 corresponds to peak wavelength 104i of first peak 102i.

In some variations at the embodiment the value of wavelength l2″″″ of second contribution 92 to introduced radiation field 22 lies in the interval corresponding to first shoulder 106ii of second peak 102ii.

In other variations of this embodiment wavelength l1″″″ and/or l2″″″ of first and second contributions to introduced radiation field 22 correspond to peak wavelength 104ii of second peak 102ii.

Apart from the described elements, the remaining elements of the eighth to twelfth embodiments are the same as those elements of one of the first to seventh embodiments so that with respect to these elements reference is made to the explanations given in connection with the other embodiments.

Variations explained in connection with one of the preceding embodiments are also possible in connection with other embodiments described above.

**Claims**

1. Radiation field generating system (10) comprising a radiation field providing device (12) and a radiation field amplifying device (14), said radiation field providing device (12) is configured to provide and introduce a radiation field (22) into said radiation field amplifying device (14), said radiation field amplifying device (14) comprises at least one laser active medium (32) which is configured to exhibit a population inversion and said radiation field amplifying device (14) is configured to amplify the introduced radiation field (22) to an amplified radiation field (24) wherein the radiation field providing device (12) is configured to provide said introduced radiation field (22) with a first contribution (92) and a second contribution (94) and said first contribution (92) and said second contribution (94) differ in at least one characteristic property, wherein

   one of said first and said second contributions (92, 94) has a radial polarization and the other of said first and said second contribution (92, 94) has an azimuthal polarization, in particular with said radial polarization and said azimuthal polarization being radial and azimuthal, respectively, with respect to an axis along which said contributions propagate, **characterized in that** the radiation field generating system (10) is configured so that each of said contributions (92, 94) is switchable between different operational modes by said radiation field providing device (12), wherein said different operational modes of said contributions (92, 94) comprise at least a high mode and a low mode with an intensity of the respective contribution in said high mode being larger than in said low mode, and
   wherein said radiation field providing device (12) is configured to provide said second contribution (94) in the low mode when it provides said first contribution (92) in the high mode, and/or
   wherein said radiation field providing device (12) is configured to provide said second contribution (94) in the high mode when it provides said first contribution (92) in the low mode.

2. Radiation field generating system (10) according to claim 1, **characterized in that** said radiation field generating system (10) is configured to operate in a tunable regime.

3. Radiation field generating system (10) according one of the preceding claims, **characterized in that** the radiation field generating system (10) is configured so that said first contribution (92) and/or said second contribution (94) is/are switchable on demand by a user of said radiation field generating system (10).

4. Radiation field generating system (10) according to one of the preceding claims, **characterized in that** said radiation field amplifying device (14) comprises at least one pumping energy source (34) which is configured to pump pumping energy into said at least one laser active medium (32), to provide said population inversion.

5. Radiation field generating system (10) according to one of the preceding claims, **characterized in that** the radiation field generating system (10) is configured so that said second contribution (94) in its high mode absorbs during passing through said radiation field amplifying device (14) at least approximately the same amount of energy than said first contribution (92) in its high mode absorbs during passing through said radiation field amplifying device (14).

6. Radiation field generating system (10) according to one of the preceding claims, **characterized in that** the radiation field generating system (10) is configured so that said second contribution (94) is selected and adjusted such that said population inversion is kept below an uppermost target level, when said first contribution (92) is provided in said low mode.

7. Radiation field generating system (10) according to one of the preceding claims, **characterized in that** the radiation field generating system (10) is configured so that said second contribution (94) to said introduced radiation field (22) is selected and adjusted such that an intensity of a first contribution (96) to said amplified radiation field (24), which corresponds to said first contribution (92) to said introduced radiation field (22), is kept below an uppermost target intensity.

8. Radiation field generating system (10) according to claim 6 or 7, **characterized in that** the radiation field generating system (10) is configured so that said selection and adjustment of said second contribution (94) comprises one or more of the factors of influence on a stimulated emission generated by said second contribution (94) within said at least one laser active medium (32) with the factors being in particular: the intensity of said second contribution (94), the time evolution of the intensity of said second contribution (94), the absorption of said second contribution (94) by said radiation field amplifying device (14), the amplification of said second contribution (94) by said radiation field amplifying device (14), the wavelength of said second contribution (94), and an optical path length of said second contribution (94) in said at least one laser active medium (32).

9. Radiation field generating system (10) according to one of the preceding claims, **characterized in that** polarization directions of said first contribution (92) and said second contribution (94) to said introduced radiation field (22) are at least approximately perpendicular to each other.

10. Radiation field generating system (10) according to one of the preceding claims, **characterized in that** the radiation field generating system (10) is configured so that said first contribution and/or said second contribution in said high mode and/or in said low mode, are/is a pulsed radiation field.

11. Radiation field generating system (10) according to one of the preceding claims, **characterized in that** said radiation field providing device (12) comprises at least one source (112, 122) of an initial seed radiation field (114, 124), in particular exactly one source (112, 122) of one initial seed radiation field (114, 124) or exactly two sources (112, 122) of a first and a second initial seed radiation field (114, 124).

12. Radiation field generating system (10) according to one of the preceding claims, **characterized in that** said radiation field providing device (12) comprises at least one modulator (116, 126) for at least one initial radiation field (114, 124) and the at least one modulator (116, 126) is configured to modulate the at least one initial radiation field (114, 124) to provide a first and a second seed radiation field (118, 128) and in particular the radiation field generating system (10) is configured to introduce said first and said second seed radiation fields (118, 128) by an introducing unit (142) as said first and said second contributions (92, 94) into said radiation field amplifying device (14).

13. Radiation field generating system (10) according to one of the preceding claims, **characterized in that** the system (10) comprises a grating mirror (322), wherein said grating mirror (322) has gratings which are rotational symmetrical with respect to an axis (328) of said grating mirror (322), in particular said grating mirror (322) has grooves (342) at a structured side (324), in particular said grooves (342) run essentially along circular lines around said axis (328) of said grating mirror (322), wherein in particular said grating mirror (322) comprises exactly one layer (326) or several layers (326) with in particular alternating refractive indices.

14. Radiation field generating system (10) according to one of the preceding claims, **characterized in that** said radiation field generating system (10) comprises a splitting unit (172), which is configured to split said first and said second contributions (96, 98) to said amplified radiation field (24) to provide at least one generated amplified radiation field, which corresponds to said first contribution to said amplified radiation field, wherein in particular said splitting unit (172) comprises said grating mirror (322).

15. Radiation field generating system (10) according to one of the preceding claims, **characterized in that** the radiation field generating system (10) is configured so that said amplified radiation field (24), in particular said first contribution (96) to said amplified radiation field (24), is used for material processing.

**Patentansprüche**

1. Strahlungsfelderzeugungssystem (10), umfassend eine Strahlungsfeldbereitstellungsvorrichtung (12) und eine Strahlungsfeldverstärkungsvorrichtung (14), wobei die Strahlungsfeldbereitstellungsvorrichtung (12) konfiguriert ist, um ein Strahlungsfeld (22) bereitzustellen und in die Strahlungsfeldverstärkungsvorrichtung (14) einzuführen, die Strahlungsfeldverstärkungsvorrichtung (14) mindestens ein laseraktives Medium (32) umfasst, das konfiguriert ist, um eine Besetzungsinversion zu zeigen, und die Strahlungsfeldverstärkungsvorrichtung (14) konfiguriert ist, um das eingeführte Strahlungsfeld (22) zu einem verstärkten Strahlungsfeld (24) zu verstärken, wobei die Strahlungsfeldbereitstellungsvorrichtung (12) konfiguriert ist, um das eingeführte Strahlungsfeld (22) mit einem ersten Beitrag (92) und einem zweiten Beitrag (94) bereitzustellen und der erste Beitrag (92) und der zweite Beitrag (94) sich in mindestens einer charakteristischen Eigenschaft unterscheiden, wobei einer von dem ersten und dem zweiten Beitrag (92, 94) eine radiale Polarisation und der andere von dem ersten und dem zweiten Beitrag (92, 94) eine azimutale Polarisation aufweist, wobei insbesondere die radiale Polarisation und die azimutale Polarisation radial bzw. azimutal in Bezug auf eine Achse sind, entlang der sich die Beiträge ausbreiten, **dadurch gekennzeichnet, dass** das Strahlungsfelderzeugungssystem (10) so konfiguriert ist, dass jeder der Beiträge (92, 94) durch die Strahlungsfeldbereitstellungsvorrichtung (12) zwischen verschiedenen Betriebsmodi umschaltbar ist, wobei die verschiedenen Betriebsmodi der Beiträge (92, 94) mindestens einen hohen Modus und einen niedrigen Modus umfassen, wobei eine Intensität des jeweiligen Beitrags in dem hohen Modus größer als in dem niedrigen Modus ist, und

wobei die Strahlungsfeldbereitstellungsvorrichtung (12) konfiguriert ist, um den zweiten Beitrag (94) in dem niedrigen Modus bereitzustellen, wenn sie den ersten Beitrag (92) in dem hohen Modus bereitstellt, und/oder wobei die Strahlungsfeldbereitstellungsvorrichtung (12) konfiguriert ist, um den zweiten Beitrag (94) in dem hohen Modus bereitzustellen, wenn sie den ersten Beitrag (92) in dem niedrigen Modus bereitstellt.

2. Strahlungsfelderzeugungssystem (10) nach Anspruch 1, **dadurch gekennzeichnet, dass** das Strahlungsfelderzeugungssystem (10) für den Betrieb in einem abstimmbaren Bereich konfiguriert ist.

3. Strahlungsfelderzeugungssystem (10) nach einem der vorhergehenden Ansprüche, **dadurch gekennzeichnet, dass** das Strahlungsfelderzeugungssystem (10) so konfiguriert ist, dass der erste Beitrag (92) und/oder der zweite Beitrag (94) auf Anforderung durch einen Benutzer des Strahlungsfelderzeugungssystems (10) schaltbar ist/sind.

4. Strahlungsfelderzeugungssystem (10) nach einem der vorhergehenden Ansprüche, **dadurch gekennzeichnet, dass** die Strahlungsfeldverstärkungsvorrichtung (14) mindestens eine Pumpenergiequelle (34) umfasst, die konfiguriert ist, um Pumpenergie in das mindestens eine laseraktive Medium (32) zu pumpen, um die Besetzungsumkehr bereitzustellen.

5. Strahlungsfelderzeugungssystem (10) nach einem der vorhergehenden Ansprüche, **dadurch gekennzeichnet, dass** das Strahlungsfelderzeugungssystem (10) so konfiguriert ist, dass der zweite Beitrag (94) in seinem hohen Modus während des Durchgangs durch die Strahlungsfeldverstärkungsvorrichtung (14) mindestens ungefähr die gleiche Energiemenge absorbiert wie der erste Beitrag (92) in seinem hohen Modus während des Durchgangs durch die Strahlungsfeldverstärkungsvorrichtung (14) absorbiert.

6. Strahlungsfelderzeugungssystem (10) nach einem der vorhergehenden Ansprüche, **dadurch gekennzeichnet, dass** das Strahlungsfelderzeugungssystem (10) so konfiguriert ist, dass der zweite Beitrag (94) so ausgewählt und eingestellt wird, dass die Besetzungsinversion unter einem obersten Zielniveau gehalten wird, wenn der erste Beitrag (92) im niedrigen Modus bereitgestellt wird.

7. Strahlungsfelderzeugungssystem (10) nach einem der vorhergehenden Ansprüche, **dadurch gekennzeichnet, dass** das Strahlungsfelderzeugungssystem (10) so konfiguriert ist, dass der zweite Beitrag (94) zu dem eingeführten Strahlungsfeld (22) so ausgewählt und eingestellt wird, dass eine Intensität eines ersten Beitrags (96) zu dem verstärkten Strahlungsfeld (24), der dem ersten Beitrag (92) zu dem eingeführten Strahlungsfeld (22) entspricht, unter einer obersten Zielintensität gehalten wird.

8. Strahlungsfelderzeugungssystem (10) nach Anspruch 6 oder 7, **dadurch gekennzeichnet, dass** das Strahlungsfelderzeugungssystem (10) so konfiguriert ist, dass die Auswahl und Einstellung des zweiten Beitrags (94) einen oder mehrere der Einflussfaktoren auf eine durch den zweiten Beitrag (94) erzeugte stimulierte Emission innerhalb des mindestens einen laseraktiven Mediums (32) umfasst, wobei die Faktoren insbesondere sind: die Intensität des zweiten Beitrags (94), die zeitliche Entwicklung der Intensität des zweiten Beitrags (94), die Absorption des zweiten Beitrags (94) durch die Strahlungsfeldverstärkungsvorrichtung (14), die Verstärkung des zweiten Beitrags (94) durch die Strahlungsfeldverstärkungsvorrichtung (14), die Wellenlänge des zweiten Beitrags (94) und eine optische Weglänge des zweiten Beitrags (94) in dem mindestens einen laseraktiven Medium (32).

9. Strahlungsfelderzeugungssystem (10) nach einem der vorhergehenden Ansprüche, **dadurch gekennzeichnet, dass** die Polarisationsrichtungen des ersten Beitrags (92) und des zweiten Beitrags (94) zu dem eingeführten Strahlungsfeld (22) zumindest annähernd senkrecht zueinander stehen.

10. Strahlungsfelderzeugungssystem (10) nach einem der vorhergehenden Ansprüche, **dadurch gekennzeichnet, dass** das Strahlungsfelderzeugungssystem (10) so konfiguriert ist, dass der erste Beitrag und/oder der zweite Beitrag in dem hohen Modus und/oder in dem niedrigen Modus ein gepulstes Strahlungsfeld ist/sind.

**11.** Strahlungsfelderzeugungssystem (10) nach einem der vorhergehenden Ansprüche, **dadurch gekennzeichnet, dass** die Strahlungsfeldbereitstellungsvorrichtung (12) mindestens eine Quelle (112, 122) eines initialen Seed-Strahlungsfeldes (114, 124), insbesondere genau eine Quelle (112, 122) eines initialen Seed-Strahlungsfeldes (114, 124) oder genau zwei Quellen (112, 122) eines ersten und eines zweiten initialen Seed-Strahlungsfeldes (114, 124) umfasst.

**12.** Strahlungsfelderzeugungssystem (10) nach einem der vorhergehenden Ansprüche, **dadurch gekennzeichnet, dass** die Strahlungsfeldbereitstellungsvorrichtung (12) mindestens einen Modulator (116, 126) für mindestens ein anfängliches Strahlungsfeld (114, 124) umfasst und der mindestens eine Modulator (116, 126) so konfiguriert ist, dass er das mindestens eine anfängliche Strahlungsfeld (114, 124) moduliert, um ein erstes und ein zweites Seed-Strahlungsfeld (118, 128) bereitzustellen, und insbesondere ist das Strahlungsfelderzeugungssystem (10) so konfiguriert, dass es das erste und das zweite Seed-Strahlungsfeld (118, 128) durch eine Einführungseinheit (142) als die ersten und zweiten Beiträge (92, 94) in die Strahlungsfeldverstärkungsvorrichtung (14) einführt.

**13.** Strahlungsfelderzeugungssystem (10) nach einem der vorhergehenden Ansprüche, **dadurch gekennzeichnet, dass** das System (10) einen Gitterspiegel (322) umfasst, wobei der Gitterspiegel (322) Gitter aufweist, die rotationssymmetrisch zu einer Achse (328) des Gitterspiegels (322) sind, insbesondere weist der Gitterspiegel (322) an einer strukturierten Seite (324) Rillen (342) auf, insbesondere verlaufen die Rillen (342) im Wesentlichen entlang von Kreislinien um die Achse (328) des Gitterspiegels (322), wobei insbesondere der Gitterspiegel (322) genau eine Schicht (326) oder mehrere Schichten (326) mit insbesondere wechselnden Brechungsindizes umfasst.

**14.** Strahlungsfelderzeugungssystem (10) nach einem der vorhergehenden Ansprüche, **dadurch gekennzeichnet, dass** das Strahlungsfelderzeugungssystem (10) eine Aufspalteinheit (172) umfasst, die konfiguriert ist, um den ersten und den zweiten Beitrag (96, 98) zu dem verstärkten Strahlungsfeld (24) aufzuspalten, um mindestens ein erzeugtes verstärktes Strahlungsfeld bereitzustellen, das dem ersten Beitrag zu dem verstärkten Strahlungsfeld entspricht, wobei insbesondere die Aufspalteinheit (172) den Gitterspiegel (322) umfasst.

**15.** Strahlungsfelderzeugungssystem (10) nach einem der vorhergehenden Ansprüche, **dadurch gekennzeichnet, dass** das Strahlungsfelderzeugungssystem (10) so konfiguriert ist, dass das verstärkte Strahlungsfeld (24), insbesondere der erste Beitrag (96) zu dem verstärkten Strahlungsfeld (24), zur Materialbearbeitung verwendet wird.

## Revendications

**1.** Système de génération de champ de rayonnement (10) comprenant un dispositif de fourniture de champ de rayonnement (12) et un dispositif d'amplification de champ de rayonnement (14), ledit dispositif de fourniture de champ de rayonnement (12) est configuré pour fournir et introduire un champ de rayonnement (22) dans ledit dispositif d'amplification de champ de rayonnement (14), ledit dispositif d'amplification de champ de rayonnement (14) comprend au moins un milieu actif laser (32) qui est configuré pour présenter une inversion de population et ledit dispositif d'amplification de champ de rayonnement (14) est configuré pour amplifier le champ de rayonnement introduit (22) en un champ de rayonnement amplifié (24) dans lequel le dispositif de fourniture de champ de rayonnement (12) est configuré pour fournir ledit champ de rayonnement introduit (22) avec une première contribution (92) et une seconde contribution (94) et ladite première contribution (92) et ladite seconde contribution (94) diffèrent par au moins une propriété caractéristique, dans lequel

l'une desdites première et seconde contributions (92, 94) a une polarisation radiale et l'autre desdites première et seconde contributions (92, 94) a une polarisation azimutale, en particulier ladite polarisation radiale et ladite polarisation azimutale étant radiale et azimutale, respectivement, par rapport à un axe le long duquel lesdites contributions se propagent, **caractérisé en ce que** le système de génération de champ de rayonnement (10) est configuré de sorte que chacune desdites contributions (92, 94) peut être commutée entre différents modes fonctionnels par ledit dispositif de fourniture de champ de rayonnement (12), dans lequel lesdits différents modes fonctionnels desdites contributions (92, 94) comprennent au moins un mode élevé et un mode faible avec une intensité de la contribution respective dans ledit mode élevé étant plus grande que dans ledit mode faible, et dans lequel ledit dispositif de fourniture de champ de rayonnement (12) est configuré pour fournir ladite seconde contribution (94) dans le mode faible lorsqu'il fournit ladite première contribution (92) dans le mode élevé, et/ou dans lequel ledit dispositif de fourniture de champ de rayonnement (12) est configuré pour fournir ladite seconde contribution (94) dans le mode élevé lorsqu'il fournit ladite première contribution (92) dans le mode faible.

**2.** Système de génération de champ de rayonnement (10) selon la revendication 1, **caractérisé en ce que** ledit système de génération de champ de rayonnement (10) est configuré pour fonctionner dans un régime accordable.

**3.** Système de génération de champ de rayonnement (10) selon l'une des revendications précédentes, **caractérisé en ce que** le système de génération de champ de rayonnement (10) est configuré de sorte que ladite première contribution (92) et/ou ladite seconde contribution (94) sont commutables à la demande d'un utilisateur dudit système de génération de champ de rayonnement (10).

**4.** Système de génération de champ de rayonnement (10) selon l'une des revendications précédentes, **caractérisé en ce que** ledit dispositif d'amplification de champ de rayonnement (14) comprend au moins une source d'énergie de pompage (34) qui est configurée pour pomper de l'énergie de pompage dans ledit au moins un milieu actif laser (32), afin de fournir ladite inversion de population.

**5.** Système de génération de champ de rayonnement (10) selon l'une des revendications précédentes, **caractérisé en ce que** le système de génération de champ de rayonnement (10) est configuré de sorte que ladite seconde contribution (94) dans son mode élevé absorbe lors de son passage à travers ledit dispositif d'amplification de champ de rayonnement (14) au moins approximativement la même quantité d'énergie que ladite première contribution (92) dans son mode élevé absorbe lors de son passage à travers ledit dispositif d'amplification de champ de rayonnement (14).

**6.** Système de génération de champ de rayonnement (10) selon l'une des revendications précédentes, **caractérisé en ce que** le système de génération de champ de rayonnement (10) est configuré de sorte que ladite seconde contribution (94) est sélectionnée et ajustée de telle sorte que ladite inversion de population est maintenue en dessous d'un niveau cible supérieur, lorsque ladite première contribution (92) est fournie dans ledit mode faible.

**7.** Système de génération de champ de rayonnement (10) selon l'une des revendications précédentes, **caractérisé en ce que** le système de génération de champ de rayonnement (10) est configuré de sorte que ladite seconde contribution (94) audit champ de rayonnement introduit (22) est sélectionnée et ajustée de telle sorte qu'une intensité d'une première contribution (96) audit champ de rayonnement amplifié (24), qui correspond à ladite première contribution (92) audit champ de rayonnement introduit (22), est maintenue en dessous d'une intensité cible supérieure.

**8.** Système de génération de champ de rayonnement (10) selon la revendication 6 ou 7, **caractérisé en ce que** le système de génération de champ de rayonnement (10) est configuré de sorte que ladite sélection et ledit ajustement de ladite seconde contribution (94) comprennent un ou plusieurs des facteurs d'influence sur une émission stimulée générée par ladite seconde contribution (94) au sein dudit au moins un milieu actif laser (32) avec les facteurs étant en particulier : l'intensité de ladite seconde contribution (94), l'évolution temporelle de l'intensité de ladite seconde contribution (94), l'absorption de ladite seconde contribution (94) par ledit dispositif d'amplification de champ de rayonnement (14), l'amplification de ladite seconde contribution (94) par ledit dispositif d'amplification de champ de rayonnement (14), la longueur d'onde de ladite seconde contribution (94), et une longueur de trajet optique de ladite seconde contribution (94) dans ledit au moins un milieu actif laser (32).

**9.** Système de génération de champ de rayonnement (10) selon l'une des revendications précédentes, **caractérisé en ce que** les directions de polarisation de ladite première contribution (92) et de ladite seconde contribution (94) audit champ de rayonnement introduit (22) sont au moins approximativement perpendiculaires l'une à l'autre.

**10.** Système de génération de champ de rayonnement (10) selon l'une des revendications précédentes, **caractérisé en ce que** le système de génération de champ de rayonnement (10) est configuré de sorte que ladite première contribution et/ou ladite seconde contribution dans ledit mode élevé et/ou dans ledit mode faible, sont un champ de rayonnement pulsé.

**11.** Système de génération de champ de rayonnement (10) selon l'une des revendications précédentes, **caractérisé en ce que** ledit dispositif de fourniture de champ de rayonnement (12) comprend au moins une source (112, 122) d'un champ de rayonnement d'ensemencement initial (114, 124), en particulier exactement une source (112, 122) d'un champ de rayonnement d'ensemencement initial (114, 124) ou exactement deux sources (112, 122) d'un premier et d'un second champ de rayonnement d'ensemencement initial (114, 124).

**12.** Système de génération de champ de rayonnement (10) selon l'une des revendications précédentes, **caractérisé en**

**ce que** ledit dispositif de fourniture de champ de rayonnement (12) comprend au moins un modulateur (116, 126) pour au moins un champ de rayonnement initial (114, 124) et l'au moins un modulateur (116, 126) est configuré pour moduler l'au moins un champ de rayonnement initial (114, 124) pour fournir un premier et un second champ de rayonnement d'ensemencement (118, 128) et, en particulier, le système de génération de champ de rayonnement (10) est configuré pour introduire lesdits premier et second champs de rayonnement d'ensemencement (118, 128) par une unité d'introduction (142) en tant que lesdites première et seconde contributions (92, 94) dans ledit dispositif d'amplification de champ de rayonnement (14).

13. Système de génération de champ de rayonnement (10) selon l'une des revendications précédentes, **caractérisé en ce que** le système (10) comprend un miroir à réseau (322), dans lequel ledit miroir à réseau (322) a des réseaux qui sont symétriques de rotation par rapport à un axe (328) dudit miroir à réseau (322), en particulier, ledit miroir à réseau (322) a des rainures (342) sur un côté structuré (324), en particulier, lesdites rainures (342) s'étendent essentiellement le long de lignes circulaires autour dudit axe (328) dudit miroir à réseau (322), dans lequel en particulier, ledit miroir à réseau (322) comprend exactement une couche (326) ou plusieurs couches (326) avec en particulier des indices de réfraction alternés.

14. Système de génération de champ de rayonnement (10) selon l'une des revendications précédentes, **caractérisé en ce que** ledit système de génération de champ de rayonnement (10) comprend une unité de division (172), qui est configurée pour diviser lesdites première et seconde contributions (96, 98) audit champ de rayonnement amplifié (24) afin de fournir au moins un champ de rayonnement amplifié généré, qui correspond à ladite première contribution audit champ de rayonnement amplifié, dans lequel en particulier ladite unité de division (172) comprend ledit miroir à réseau (322).

15. Système de génération de champ de rayonnement (10) selon l'une des revendications précédentes, **caractérisé en ce que** le système de génération de champ de rayonnement (10) est configuré de sorte que ledit champ de rayonnement amplifié (24), en particulier ladite première contribution (96) audit champ de rayonnement amplifié (24), est utilisé pour le traitement de matériaux.

FIG.1

EP 3 413 410 B1

EP 3 413 410 B1

FIG.2

FIG.3

EP 3 413 410 B1

## FIG.4

EP 3 413 410 B1

FIG.5

Intensity of 94

I2h

I2l

Intensity of 92

I1

t1  t2  t3  t4  t5

time

0

# FIG.6

population
inversion

uppermost
target
level

time

intensity of 96

uppermost
target
intensity

time

t6                   t7                   t8

FIG.7

intensity of 92

intensity of 94

time

t9

t10

t11

EP 3 413 410 B1

EP 3 413 410 B1

FIG.8

FIG.9

EP 3 413 410 B1

FIG.10

# FIG.11

FIG.12

EP 3 413 410 B1

# FIG.13

EP 3 413 410 B1

FIG.14

FIG.15

# FIG.16

## FIG.17

FIG.18

EP 3 413 410 B1

FIG.19

EP 3 413 410 B1

FIG.20

FIG.21

FIG.22

**EP 3 413 410 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657153 A
- US 20110085149 A1
- US 20160111849 A1
- US 20060050392 A1
- US 6680799 B1

**Non-patent literature cited in the description**

- *Optics Letters*, vol. 28 (10), 807-809